(19) Europäisches Patentamt
European Patent Office
Office européen des brevets

(11) **EP 4 611 449 A1**

(12) **EUROPEAN PATENT APPLICATION**
published in accordance with Art. 153(4) EPC

(43) Date of publication:
**03.09.2025 Bulletin 2025/36**

(21) Application number: **23884960.8**

(22) Date of filing: **31.10.2023**

(51) International Patent Classification (IPC):
**H04W 68/02** (2009.01)

(52) Cooperative Patent Classification (CPC):
**H04W 68/02; H04W 76/27; H04W 76/28;**
**Y02D 30/70**

(86) International application number:
**PCT/CN2023/128892**

(87) International publication number:
**WO 2024/094031 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.11.2022 CN 202211375214**

(71) Applicant: **Huawei Technologies Co., Ltd.**
**Shenzhen, Guangdong 518129 (CN)**

(72) Inventors:
• **XIE, Xi**
**Shenzhen, Guangdong 518129 (CN)**
• **KONG, Lingshuai**
**Shenzhen, Guangdong 518129 (CN)**
• **CHANG, Junren**
**Shenzhen, Guangdong 518129 (CN)**
• **HAN, Feng**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57) This application provides a communication method and apparatus, to increase a probability that a terminal device is paged by a network. The method includes: determining, according to a first rule or a second rule, a first discontinuous reception (DRX) cycle outside a paging time window of first extended discontinuous reception (eDRX) configured by a core network device, and monitoring paging outside the paging time window of the first eDRX based on the first DRX cycle. The first rule is used to determine a DRX cycle of a terminal device in an idle state inside the paging time window of the first eDRX, and the second rule is used to determine a DRX cycle of a terminal device in an inactive state outside the paging time window of the first eDRX. In embodiments of this application, a rule for determining the DRX cycle outside the paging time window by the terminal device in the RRC_INACTIVE state is specified, so that a DRX cycle determined by an access network device is the same as that determined by the terminal device. This can increase the probability that the terminal device is paged by the access network device.

FIG. 2

**Description**

CROSS-REFERENCE TO RELATED APPLICATIONS

This application claims priority to Chinese Patent Application No. 202211375214.8, filed with the China National Intellectual Property Administration on November 4, 2022 and entitled "COMMUNICATION METHOD AND APPARATUS", which is incorporated herein by reference in its entirety.

TECHNICAL FIELD

This application relates to the field of communication technologies, and in particular, to a communication method and apparatus.

BACKGROUND

A network may initiate paging to a terminal device in a radio resource control (radio resource control, RRC) idle (RRC_IDLE) state, an RRC inactive (RRC_INACTIVE) state, or an RRC connected (RRC_CONNECTED) state. The terminal device may monitor a paging occasion (paging occasion, PO) of the terminal device in each paging cycle (paging cycle), to determine whether the network pages the terminal device. The paging cycle may also be referred to as a discontinuous reception (discontinuous reception, DRX) cycle.

The terminal device and the network may have inconsistent understandings on a status of the terminal device. In addition, the terminal device in the RRC_IDLE state and the terminal device in the RRC_INACTIVE state determine a DRX cycle in different manners. As a result, the terminal device cannot be paged by the network.

SUMMARY

This application provides a communication method and apparatus, to increase a probability that a terminal device is paged by a network.

According to a first aspect, a communication method is provided. The method may be performed by a terminal device or a chip, a chip system, or a circuit in the terminal device. The method may be implemented by using the following steps: determining a first DRX cycle outside a paging time window of first extended discontinuous reception (extended discontinuous reception, eDRX) according to a first rule or a second rule, and monitoring paging outside the paging time window of the first eDRX based on the first DRX cycle. The first rule is used to determine a DRX cycle of a terminal device in an idle state inside the paging time window of the first eDRX, and the second rule is used to determine a DRX cycle of a terminal device in an inactive state outside the paging time window of the first eDRX; and the first eDRX is configured by a core network device.

Because the terminal device does not perform monitoring outside the paging time window when the terminal device is in the RRC_IDLE state, if the terminal device in the RRC_INACTIVE state uses a rule for determining a DRX cycle by the terminal device in the RRC_IDLE state, monitoring cannot be performed outside the paging time window. In this embodiment of this application, a rule for determining the DRX cycle outside the paging time window by the terminal device in the RRC_INACTIVE state is specified, so that a DRX cycle determined by an access network device is the same as that determined by the terminal device. This can increase a probability that the terminal device is paged by the access network device.

In addition, the terminal device in the RRC_INACTIVE state still uses, outside the paging time window, an original rule (namely, the second rule) for determining the DRX cycle of the terminal device in the RRC_INACTIVE state outside the paging time window. For the terminal device and a network, complexity of implementing this solution is low.

Alternatively, the terminal device in the RRC_INACTIVE state also uses, outside the paging time window, a rule (namely, the first rule) for determining a DRX cycle of the terminal device in the RRC_IDLE state inside the paging time window, so that the terminal device in the RRC_INACTIVE state uses a same rule inside the paging time window and outside the paging time window. For the terminal device and a network, complexity of implementing this solution is low.

In a possible design, the first rule is: If a first specific DRX cycle is configured by the core network device for a first terminal device, the first DRX cycle is the minimum of the first specific DRX cycle and a default DRX cycle; or if a first specific DRX cycle is not configured by the core network device for a first terminal device, the first DRX cycle is a default DRX cycle.

In a possible design, second eDRX is configured by the access network device for the first terminal device, and a cycle of the second eDRX is less than or equal to maximum timing duration supported by a system frame number; or second eDRX is not configured by the access network device for the first terminal device.

In a possible design, the second rule is: If second eDRX is configured by the access network device for the first terminal device, and a cycle of the second eDRX is less than or equal to maximum timing duration supported by a system frame number, the first DRX cycle is the cycle of the second eDRX; or if second eDRX is not configured by the access network device for the first terminal device, the first DRX cycle is a second specific DRX cycle configured by the access network device.

In a possible design, the monitoring paging outside the paging time window of the first eDRX based on the first DRX cycle includes: determining a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and monitoring the paging outside the paging time window of the first eDRX based on the first parameter.

The rule for determining the DRX cycle outside the paging time window by the terminal device in the RRC_INACTIVE state is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

In a possible design, the method further includes: determining a second DRX cycle inside the paging time window of the first eDRX according to the first rule; and monitoring paging inside the paging time window of the first eDRX based on the second DRX cycle.

When determining a DRX cycle inside a paging time window of CN eDRX, the terminal device in the RRC_INACTIVE state uses the rule for determining the DRX cycle inside the paging time window of the CN eDRX by the terminal device in the RRC_IDLE state. In this way, even if the access network device and the terminal device have inconsistent understandings on a status of the terminal device, a same DRX cycle can be determined by the access network device and the terminal device according to a same rule, so that the probability that the terminal device is paged by the access network device can be increased.

In a possible design, the monitoring paging inside the paging time window of the first eDRX based on the second DRX cycle includes: determining a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and monitoring the paging inside the paging time window of the first eDRX based on the second parameter.

The rule for determining the DRX cycle inside the paging time window by the terminal device in the RRC_INACTIVE state is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

According to a second aspect, a communication method is provided. The method may be performed by an access network device or a chip, a chip system, or a circuit in the access network device. The method may be implemented by using the following steps: determining a first DRX cycle of a first terminal device in an inactive state outside a paging time window of first eDRX according to a first rule or a second rule, and paging the first terminal device outside the paging time window of the first eDRX based on the first DRX cycle. The first rule is used to determine a DRX cycle of a terminal device in an idle state inside the paging time window of the first eDRX, and the second rule is used to determine a DRX cycle of a terminal device in an inactive state outside the paging time window of the first eDRX; and the first eDRX is configured by a core network device.

Because the terminal device does not perform monitoring outside the paging time window when the terminal device is in the RRC_IDLE state, if the terminal device in the RRC_INACTIVE state uses a rule for determining a DRX cycle by the terminal device in the RRC_IDLE state, monitoring cannot be performed outside the paging time window. In this embodiment of this application, a rule for determining the DRX cycle outside the paging time window by the terminal device in the RRC_INACTIVE state is specified, so that a DRX cycle determined by an access network device is the same as that determined by the terminal device. This can increase a probability that the terminal device is paged by the access network device.

In addition, the terminal device in the RRC_INACTIVE state still uses, outside the paging time window, an original rule (namely, the second rule) for determining the DRX cycle of the terminal device in the RRC_INACTIVE state outside the paging time window. For the terminal device and a network, complexity of implementing this solution is low.

Alternatively, the terminal device in the RRC_INACTIVE state also uses, outside the paging time window, a rule (namely, the first rule) for determining a DRX cycle of the terminal device in the RRC_IDLE state inside the paging time window, so that the terminal device in the RRC_INACTIVE state uses a same rule inside the paging time window and outside the paging time window. For the terminal device and a network, complexity of implementing this solution is low.

In a possible design, the first rule is: If a first specific DRX cycle is configured by the core network device for the first terminal device, the first DRX cycle is the minimum of the first specific DRX cycle and a default DRX cycle; or if a first specific DRX cycle is not configured by the core network device for the first terminal device, the first DRX cycle is a default DRX cycle.

In a possible design, second eDRX is configured by the access network device for the first terminal device, and a cycle of the second eDRX is less than or equal to maximum timing duration supported by a system frame number; or second eDRX is not configured by the access network device for the first terminal device.

In a possible design, the second rule is: If second eDRX is configured by the access network device for the first terminal device, and a cycle of the second eDRX is less than or equal to maximum timing duration supported by a system frame number, the first DRX cycle is the cycle of the second eDRX; or if second eDRX is not configured by the access network device for the first terminal device, the first DRX cycle is a second specific DRX cycle configured by the access network device.

In a possible design, the paging the first terminal device outside the paging time window of the first eDRX based on the first DRX cycle includes: determining a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and paging the first terminal device outside the paging time window of the first eDRX based on the first parameter.

The rule for determining the DRX cycle outside the paging time window by the terminal device in the RRC_INACTIVE state is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

In a possible design, the method further includes: determining a second DRX cycle of the first terminal device inside the paging time window of the first eDRX according to the first rule, where the second rule is used to determine the DRX cycle of the terminal device in the idle state inside the paging time window of the first eDRX; and paging the first terminal device inside the paging time window of the first eDRX based on the second DRX cycle.

When determining a DRX cycle inside a paging time window of CN eDRX, the terminal device in the RRC_INACTIVE state uses the rule for determining the DRX cycle inside the paging time window of the CN eDRX by the terminal device in the RRC_IDLE state. In this way, even if the access network device and the terminal device have inconsistent understandings on a status of the terminal device, a same DRX cycle can be determined by the access network device and the terminal device according to a same rule, so that the probability that the terminal device is paged by the access network device can be increased.

In a possible design, the paging the first terminal device inside the paging time window of the first eDRX based on the second DRX cycle includes: determining a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and paging the first terminal device inside the paging time window of the first eDRX based on the second parameter.

The rule for determining the DRX cycle inside the paging time window by the terminal device in the RRC_INACTIVE state is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

According to a third aspect, a communication method is provided. The method may be performed by a terminal device or a chip, a chip system, or a circuit in the terminal device. The method may be implemented by using the following steps: determining a first DRX cycle inside a paging time window of first eDRX according to a first rule, where the first rule is used to determine a DRX cycle of a terminal device in an idle state inside the paging time window of the first eDRX; and the first eDRX is configured by a core network device; determining a second DRX cycle inside a paging time window of second eDRX according to the first rule or a third rule, where the third rule is used to determine a DRX cycle of a terminal device in an inactive state inside the paging time window of the second eDRX; and the second eDRX is configured by an access network device; monitoring paging inside the paging time window of the first eDRX based on the first DRX cycle; and monitoring paging inside the paging time window of the second eDRX based on the second DRX cycle.

Because the terminal device is not configured with RAN eDRX (namely, the second eDRX) when the terminal device is in the RRC_IDLE state, if the terminal device in the RRC_INACTIVE state uses a rule for determining a DRX cycle by the terminal device in the RRC_IDLE state, monitoring cannot be performed inside the paging time window of the RAN eDRX. In this embodiment of this application, for a scenario in which the RAN eDRX is longer than 10.24s, a rule for determining a DRX cycle of the terminal device in the RRC_INACTIVE state inside the paging time window of the RAN eDRX is specified. In this way, a same DRX cycle can be determined by the access network device and the terminal device according to a same rule, so that a probability that the terminal device is paged by the access network device can be increased.

Specifically, the terminal device in the RRC_INACTIVE state uses, inside both the paging time window of the RAN eDRX and the paging time window of CN eDRX (namely, the first eDRX), a rule (namely, the first rule) for determining a DRX cycle of the terminal device in the RRC_IDLE state inside the paging time window, so that the terminal device in the RRC_INACTIVE state uses a same rule inside the paging time window of the RAN eDRX and the paging time window of the CN eDRX. For the terminal device and a network, complexity of implementing this solution is low.

Alternatively, the terminal device in the RRC_INACTIVE state still uses, inside the paging time window of the RAN eDRX, an original rule (namely, the third rule) for determining the DRX cycle of the terminal device in the RRC_INACTIVE state inside the paging time window of the RAN eDRX. For the terminal device and a network, complexity of implementing this solution is low.

In a possible design, the determining a second DRX cycle inside a paging time window of second eDRX according to the first rule or a third rule includes: determining the second DRX cycle in a first time period inside the paging time window of the second eDRX according to the first rule or the third rule, where the first time period does not belong to the paging time window of the first eDRX.

According to the foregoing design, a rule conflict in a same time period can be avoided, so that the probability that the terminal device is paged by the access network device can be increased.

In addition, because the terminal device is not configured with the RAN eDRX when the terminal device is in the RRC_IDLE state, a location of the paging time window of the RAN eDRX cannot be determined. However, both the terminal device in the RRC_IDLE state and the terminal device in the RRC_INACTIVE state are configured with the CN eDRX. In the foregoing manner, a rule (namely, the first rule) for determining a DRX cycle of the terminal device in the RRC_IDLE state inside the paging time window is used in an overlapping part between the paging time window of the RAN eDRX and the paging time window of the CN eDRX, in other words, the rule used inside the paging time window of the CN eDRX is used in the overlapping part between the paging time window of the RAN eDRX and the paging time window of the CN eDRX, so that the terminal device in the RRC_IDLE state and the terminal device in the RRC_INACTIVE state can determine same DRX. Even if the network and the terminal device have inconsistent understandings on a status of the terminal device, determined DRX cycles are the same, so that the probability that the terminal device is paged by the access network device can be increased.

In a possible design, the third rule is that the second DRX cycle is a first specific DRX cycle configured by the access network device; the third rule is that the second DRX cycle is the minimum of a first specific DRX cycle configured by the access network device and a default DRX cycle; or the third rule is that the second DRX cycle is the minimum of a first specific DRX cycle configured by the access network device, a second specific DRX cycle configured by the core network device, and a default DRX cycle.

In a possible design, the first rule is: If the second specific DRX cycle is configured by the core network device for a first terminal device, the second DRX cycle is the minimum of the second specific DRX cycle and the default DRX cycle; or if the second specific DRX cycle is not configured by the core network device for a first terminal device, the second DRX cycle is the default DRX cycle.

In a possible design, the monitoring paging inside the paging time window of the first eDRX based on the first DRX cycle includes: determining a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and monitoring the paging inside the paging time window of the first eDRX based on the first parameter.

According to the foregoing design, a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

In a possible design, the monitoring paging inside the paging time window of the second eDRX based on the second DRX cycle includes: determining a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and monitoring the paging inside the paging time window of the second eDRX based on the second parameter.

According to the foregoing design, a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

According to a fourth aspect, a communication method is provided. The method may be performed by an access network device or a chip, a chip system, or a circuit in the access network device. The method may be implemented by using the following steps: determining a first DRX cycle of a first terminal device in an inactive state inside a paging time window of first eDRX according to a first rule, and paging the first terminal device inside the paging time window of the first eDRX based on the first DRX cycle; and determining a second DRX cycle of the first terminal device inside a paging time window of second eDRX according to the first rule or a third rule, and paging the first terminal device inside the paging time window of the second eDRX based on the second DRX cycle.

The first rule is used to determine a DRX cycle of a terminal device in an idle state inside the paging time window of the first eDRX; and the first eDRX is configured by a core network device. The third rule is used to determine a DRX cycle of a terminal device in an inactive state inside the paging time window of the second eDRX; and the second eDRX is configured by the access network device.

Because the terminal device is not configured with RAN eDRX (namely, the second eDRX) when the terminal device is in the RRC_IDLE state, if the terminal device in the RRC_INACTIVE state uses a rule for determining a DRX cycle by the terminal device in the RRC_IDLE state, monitoring cannot be performed inside the paging time window of the RAN eDRX. In this embodiment of this application, for a scenario in which the RAN eDRX is longer than 10.24s, a rule for determining a DRX cycle of the terminal device in the RRC_INACTIVE state inside the paging time window of the RAN eDRX is specified. In this way, a same DRX cycle can be determined by the access network device and the terminal device according to a same rule, so that a probability that the terminal device is paged by the access network device can be increased.

Specifically, the terminal device in the RRC_INACTIVE state uses, inside both the paging time window of the RAN eDRX and the paging time window of CN eDRX (namely, the first eDRX), a rule (namely, the first rule) for determining a DRX cycle of the terminal device in the RRC_IDLE state inside the paging time window, so that the terminal device in the RRC_INACTIVE state uses a same rule inside the paging time window of the RAN eDRX and the paging time window of the CN eDRX. For the terminal device and a network, complexity of implementing this solution is low.

Alternatively, the terminal device in the RRC_INACTIVE state still uses, inside the paging time window of the RAN eDRX, an original rule (namely, the third rule) for determining the DRX cycle of the terminal device in the RRC_INACTIVE state inside the paging time window of the RAN eDRX. For the terminal device and a network, complexity of implementing this solution is low.

In a possible design, the determining a second DRX cycle inside a paging time window of second eDRX according to the first rule or a third rule includes: determining the second DRX cycle in a first time period inside the paging time window of the second eDRX according to the first rule or the third rule, where the first time period does not belong to the paging time window of the first eDRX.

According to the foregoing design, a rule conflict in a same time period can be avoided, so that the probability that the terminal device is paged by the access network device can be increased.

In addition, because the terminal device is not configured with the RAN eDRX when the terminal device is in the RRC_IDLE state, a location of the paging time window of the RAN eDRX cannot be determined. However, both the terminal device in the RRC_IDLE state and the terminal device in the RRC_INACTIVE state are configured with the CN eDRX. In the foregoing manner, a rule (namely, the first rule) for determining a DRX cycle of the terminal device in the RRC_IDLE state inside the paging time window is used in an overlapping part between the paging time window of the RAN eDRX and the paging time window of the CN eDRX, in other words, the rule used inside the paging time window of the CN eDRX is used in the overlapping part between the paging time window of the RAN eDRX and the paging time window of the CN eDRX, so that the terminal device in the RRC_IDLE state and the terminal device in the RRC_INACTIVE state can determine same DRX. Even if the network and the terminal device have inconsistent understandings on a status of the terminal device, determined DRX cycles are the same, so that the probability that the terminal device is paged by the access network device can be increased.

In a possible design, the third rule is that the second DRX cycle is a first specific DRX cycle configured by the access network device; the third rule is that the second DRX cycle is the minimum of a first specific DRX cycle configured by the access network device and a default DRX cycle; or the third rule is that the second DRX cycle is the minimum of a first specific DRX cycle configured by the access network device, a second specific DRX cycle configured by the core network device, and a default DRX cycle.

In a possible design, the first rule is: If the second specific DRX cycle is configured by the core network device for the first terminal device, the second DRX cycle is the minimum of the second specific DRX cycle and the default DRX cycle; or if the second specific DRX cycle is not configured by the core network device for the first terminal device, the second DRX cycle is the default DRX cycle.

In a possible design, the paging the first terminal device inside the paging time window of the first eDRX based on the first DRX cycle includes: determining a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and paging the first terminal device inside the paging time window of the first eDRX based on the first parameter.

According to the foregoing design, a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

In a possible design, the paging the first terminal device inside the paging time window of the second eDRX based on the second DRX cycle includes: determining a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and paging the first terminal device inside the paging time window of the second eDRX based on the second parameter.

According to the foregoing design, a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

According to a fifth aspect, this application further provides a communication apparatus. The communication apparatus has a function of implementing the method according to the first aspect, the third aspect, or any possible design of the first aspect or the third aspect. The communication apparatus may be implemented by hardware, or may be implemented by executing corresponding software by hardware. The hardware or software includes one or more units or modules corresponding to the foregoing function.

In a possible design, the communication apparatus includes a processor. The processor is configured to support the communication apparatus in performing a corresponding function of the terminal device in the foregoing method. The communication apparatus may further include a memory (or a storage medium). The memory may be coupled to the processor, and the memory stores program instructions and data that are necessary for the communication apparatus. Optionally, the communication apparatus further includes an interface circuit. The interface circuit is configured to support communication between the communication apparatus and a device such as an access network device. The interface circuit may alternatively be a transceiver. The transceiver may include a transmitter and a receiver. The transmitter and the receiver may be different components, or may be a same component that can implement different functions.

In a possible design, the communication apparatus includes corresponding functional modules respectively configured to implement the steps in the foregoing method. The function may be implemented by hardware, or may be implemented by executing corresponding software by hardware. The hardware or software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the third aspect. The details are not described herein again. The communication unit (or the communication module) may alternatively be a transceiver unit (or a transceiver module). The transceiver unit may include a sending unit and a receiving unit. The sending unit and the receiving unit may be different units, or may be a same unit that can implement different functions.

The communication apparatus may be a terminal device, or a chip or a chip system in the terminal device. If the communication apparatus is a terminal device, the transceiver may be a radio frequency transceiver component in the terminal device. If the communication apparatus is a chip or a chip system disposed in the terminal device, the transceiver may be a communication interface in the chip or the chip system. The communication interface is connected to a radio frequency transceiver component in the terminal device, to implement information sending and receiving through the radio frequency transceiver component.

According to a sixth aspect, this application further provides a communication apparatus. The communication apparatus has a function of implementing the method according to the second aspect, the fourth aspect, or any possible design of the second aspect or the fourth aspect. The communication apparatus may be implemented by hardware, or may be implemented by executing corresponding software by hardware. The hardware or software includes one or more units or modules corresponding to the foregoing function.

In a possible design, the communication apparatus includes a processor. The processor is configured to support the communication apparatus in performing a corresponding function of the access network device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal device. The interface circuit may alternatively be a transceiver. The transceiver may include a transmitter and a receiver. The transmitter and the receiver may be different components, or may be a same component that can implement different functions.

In a possible design, the communication apparatus includes corresponding functional modules respectively configured to implement the steps in the foregoing method. The function may be implemented by hardware, or may be implemented by executing corresponding software by hardware. The hardware or software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the second aspect or the fourth aspect. The details are not described herein again. The communication unit (or the communication module) may alternatively be a transceiver unit (or a transceiver module). The transceiver unit may include a sending unit and a receiving unit. The sending unit and the receiving unit may be different units, or may be a same unit that can implement different functions.

The communication apparatus may be an access network device, or a chip or a chip system in the access network device. If the communication apparatus is an access network device, the transceiver may be a radio frequency transceiver component in the access network device. If the communication apparatus is a chip or a chip system disposed in the access network device, the transceiver may be a communication interface in the chip or the chip system. The communication interface is connected to a radio frequency transceiver component in the access network device, to implement information sending and receiving through the radio frequency transceiver component.

According to a seventh aspect, a computer-readable storage medium is provided. The computer-readable storage medium stores a computer program or instructions. When the computer program or the instructions are executed by a processor, the method according to any one of the first aspect to the fourth aspect or any possible design in the first aspect to the fourth aspect is implemented.

According to an eighth aspect, a computer program product storing instructions is provided. When the instructions are run by a processor, the method according to any one of the first aspect to the fourth aspect or any possible design in the first aspect to the fourth aspect is implemented.

According to a ninth aspect, a communication apparatus is provided. The communication apparatus includes a processor, and may further include a storage medium. The storage medium stores instructions. When the instructions are executed by the processor, the processor is configured to implement the method according to any one of the first aspect to the fourth aspect or any possible design in the first aspect to the fourth aspect. The communication apparatus may be a chip system. The chip system may include a chip, or may include a chip and another discrete component.

According to a tenth aspect, a communication method is provided. The communication method includes the method according to the first aspect or any possible design of the first aspect, and the method according to the second aspect or any possible design of the second aspect, or includes the method according to the third aspect or any possible design of the third aspect, and the method according to the fourth aspect or any possible design of the fourth aspect.

According to an eleventh aspect, a communication system is provided. The communication system includes the apparatus (for example, the terminal device) according to the fifth aspect and the apparatus (for example, the access network device) according to the sixth aspect.

BRIEF DESCRIPTION OF DRAWINGS

FIG. 1 is a diagram of an architecture of a communication system according to an embodiment of this application;
FIG. 2 is a diagram of a DRX cycle determining rule according to an embodiment of this application;
FIG. 3 is a schematic flowchart of a paging monitoring method according to an embodiment of this application;
FIG. 4 is a schematic flowchart of a paging method according to an embodiment of this application;
FIG. 5 is a diagram of a DRX cycle determining rule according to an embodiment of this application;
FIG. 6 is a diagram of a CN eDRX cycle and a RAN eDRX cycle according to an embodiment of this application;
FIG. 7 is a diagram of a CN eDRX cycle and a RAN eDRX cycle according to an embodiment of this application;
FIG. 8 is a diagram of a CN eDRX cycle and a RAN eDRX cycle according to an embodiment of this application;
FIG. 9 is a diagram of a CN eDRX cycle and a RAN eDRX cycle according to an embodiment of this application;
FIG. 10 is a diagram of a CN eDRX cycle and a RAN eDRX cycle according to an embodiment of this application;
FIG. 11 is a diagram of a CN eDRX cycle and a RAN eDRX cycle according to an embodiment of this application;
FIG. 12 is a diagram of a DRX cycle determining rule according to an embodiment of this application;
FIG. 13 is a diagram of a DRX cycle determining rule according to an embodiment of this application;
FIG. 14 is a diagram of a DRX cycle determining rule according to an embodiment of this application;
FIG. 15 is a diagram of a DRX cycle determining rule according to an embodiment of this application;
FIG. 16 is a diagram of a DRX cycle determining rule according to an embodiment of this application;
FIG. 17 is a diagram of a DRX cycle determining rule according to an embodiment of this application;
FIG. 18 is a diagram of a structure of a communication apparatus according to an embodiment of this application; and
FIG. 19 is a diagram of a structure of a communication apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.

(1) Radio resource control (radio resource control, RRC) state of a terminal device

The terminal device has three RRC states: an RRC connected (RRC_CONNECTED) state, an RRC idle (RRC_IDLE) state, and an RRC inactive (RRC_INACTIVE) state.

RRC connected state (which may also be briefly referred to as a connected state, where the "connected state" and the "RRC connected state" are a same concept, and are interchangeable in this specification): The terminal device can perform data transmission after establishing an RRC connection to a network.

RRC idle state (which may also be briefly referred to as an idle state, where the "idle state" and the "RRC idle state" are a same concept, and are interchangeable in this specification): The terminal device does not establish an RRC connection to a network, and an access network device does not store a context of the terminal device. If the terminal device needs to enter the RRC connected state from the RRC idle state, the terminal device needs to initiate an RRC connection establishment process.

RRC inactive state (which may also be briefly referred to as an inactive state, where an "inactivated state", a "deactivated state", the "inactive state", the "RRC inactive state", an "RRC deactivated state", and the like are a same concept, and are interchangeable in this specification): The terminal device previously enters the RRC connected state with an access network device, and then the access network device releases the RRC connection, but stores a context of the terminal device. When the terminal device needs to enter the RRC connected state, the terminal device may initiate an RRC connection resume process.

(2) Paging

A network may notify, through paging, a terminal device in an RRC idle (RRC_IDLE) state or an RRC inactive (RRC_INACTIVE) state to receive a paging message (paging message), or a network may send, through paging, a short message (short message) to a terminal device in an RRC idle (RRC_IDLE) state, an RRC inactive (RRC_INACTIVE) state, or an RRC connected (RRC_CONNECTED) state, to indicate system information (system information, SI) update or an earthquake and tsunami warning/a commercial mobile alert (earthquake and tsunami warning system/commercial mobile alert service, ETWS/CMAS).

An access network device periodically sends a paging message. In the system, there may be a plurality of paging frames (paging frames, PFs), and each PF may have a plurality of paging occasions (paging occasions, POs). Each terminal device receives a paging message on a paging PO in a paging cycle. The paging cycle may also be referred to as a discontinuous reception (discontinuous reception, DRX) cycle.

The terminal device may determine a PO location of the terminal device by using the following formula:

$$i_S = \text{floor}\,(\text{UE\_ID}/N)\,\text{mod}\,\text{Ns}$$

$i_S$ indicates an index (PO index) of a PO in a PF.
UE_ID indicates identification information of the terminal device, and may specifically be a remainder obtained by dividing a 5G system temporary mobile subscription identifier (5G S-temporary mobile subscription identifier, 5G-S-TMSI) of the terminal device by 1024, or a remainder obtained by dividing a 5G-S-TMSI by 4096.
N indicates a quantity of PFs in a DRX cycle (namely, a paging cycle).
Ns indicates a quantity of POs in a PF.

The floor function is a function for rounding down.
The mod function is a modulo function.

(3) Wake-up signal (wake-up signal, WUS)

To save energy of a terminal device, a WUS is introduced, where the WUS indicates whether the terminal device needs to monitor a PO or a paging message. In a paging scenario, an access network device may send a WUS before a PO or on a PO, to indicate whether the terminal device needs to monitor the PO or receive a paging message. This reduces unnecessary paging receiving by the terminal device. In the paging scenario, the WUS may also be referred to as a paging early indication (paging early indication, PEI).

In a scenario in which the PEI is introduced, after determining a PO of the terminal device, the terminal device may determine a PEI occasion (PEI occasion, PEI-O) associated with the PO, to monitor the PEI on the determined PEI-O. A parameter $i_{PO}$ needs to be used when the terminal device determines a PF in which the PO associated with the PEI-O is located.   $i_{PO} = \left((\text{UE\_ID}\ \text{mod}\ N) \cdot N_S + i_S\right)\text{mod}N_{PO}^{PEI}$ .

For $i_S$, UE_ID, N, Ns, and mod, refer to the foregoing descriptions. $N_{PO}^{PEI}$ indicates a quantity of POs associated with one PEI.

(4) Terminal device group

A paging false alarm (false alarm) exists in an existing paging mechanism. To be specific, a terminal device receives and decodes a paging message, but finds that a network actually does not page the terminal device.

A main cause of the paging false alarm is that POs determined by a plurality of terminal devices may be the same. As a result, the plurality of terminal devices may monitor a same PO. When the plurality of terminal devices monitor a same PO, when receiving downlink control information (downlink control information, DCI) for scheduling a paging message, a terminal device obtains only scheduling information of the paging message, and cannot distinguish whether the paging message is a paging message for the terminal device. Only after receiving and decoding the paging message, the terminal device can determine, based on identification information of a terminal device in the paging message, whether current paging is for the terminal device. In this case, for a terminal device that is actually not paged, unnecessary receiving and decoding exist, causing unnecessary power consumption of the terminal device.

Terminal device subgrouping (UE subgrouping) is one of mechanisms for reducing the paging false alarm. A basic idea of the mechanism is as follows: Terminal devices that monitor a same PO are grouped, that is, the terminal devices that monitor the same PO are grouped into different groups (subgroups). The network indicates, by using a PEI, a terminal device group to which a terminal device in the current paging belongs. When receiving the PEI, the terminal device determines, based on the indicated terminal device group, whether the current paging is for the terminal device. If the PEI indicates a terminal device group to which the terminal device belongs, the terminal device monitors a PO associated with the PEI, receives paging DCI, and decodes the paging message based on scheduling information of the paging DCI. Otherwise, the terminal device no longer monitors the PO associated with the PEI and no longer receives a paging message.

In a possible solution, the terminal device may determine a group number of the terminal device group based on the identification information of the terminal device and a related parameter broadcast by an access network device. Specifically, the group number of the terminal device group may be determined by using the following formula:

$$\text{subgroupID} = (\text{floor}(UE\_ID/(N^*Ns))\ \text{mod}\ \text{subgroupsNumForUEID}) + (\text{subgroupsNumPerPO} - \text{subgroupsNumForUEID}).$$

subgroupID indicates the group number of the terminal device group.

UE_ID indicates the identification information of the terminal device, and may specifically be a remainder obtained by dividing a 5G-S-TMSI of the terminal device by 32768, or a remainder obtained by dividing a 5G-S-TMSI by 8192. For N, Ns, the floor function, and the mod function, refer to the foregoing descriptions.

subgroupsNumForUEID indicates a maximum quantity of terminal device groups supported by the access network device for grouping based on identifiers of terminal devices in one PO, and subgroupsNumForUEID is a parameter broadcast by the access network device.

subgroupsNumPerPO indicates a maximum quantity of supported terminal device groups in one PO, and subgroupsNumPerPO is a parameter broadcast by the access network device.

(5) Extended discontinuous reception (extended discontinuous reception, eDRX)

The eDRX is enhancement of a DRX mechanism (that is, a paging mechanism) for a terminal device in an RRC_IDLE state and a terminal device in an RRC_INACTIVE state. A basic principle is as follows: A longer DRX cycle is configured for the terminal device, so that paging monitoring cycles of the terminal device are sparser, to reduce paging monitoring operations performed by the terminal device, and reduce power consumption of the terminal device.

There are two types of eDRX: eDRX configured by a core network (core network, CN) (CN eDRX) and eDRX configured by an access network (radio access network, RAN) (RAN eDRX). The CN eDRX is configured by a core network device for the terminal device by using non-access stratum (non-access stratum, NAS) signaling, and the RAN eDRX is configured by an access network device for the terminal device by using RRC signaling.

Currently, the CN eDRX and/or the RAN eDRX may be configured for the terminal device in the RRC_INACTIVE state. The CN eDRX may be configured for the terminal device in the RRC_IDLE state.

When an eDRX cycle is not longer than 10.24s, the eDRX cycle is used as a DRX cycle, that is, a time interval between two adjacent POs monitored by the terminal device is the eDRX cycle.

When an eDRX cycle is longer than 10.24s, the terminal device determines, with reference to a paging time window (paging time window, PTW) mechanism, a PO that needs to be monitored. A time interval between two adjacent PTWs is a length of the eDRX cycle. The terminal device in the RRC_IDLE state monitors only a PO inside the PTW, and the terminal device in the RRC_INACTIVE state needs to monitor both a PO inside the PTW and a PO outside the PTW. However, rules for determining a DRX cycle inside the PTW and outside the PTW are different.

In embodiments of this application, "at least one" means one or more, and "a plurality of" means two or more. "And/or" describes an association relationship between associated objects and indicates that three relationships may exist. For example, A and/or B may indicate one of the following cases: Only A exists, both A and B exist, or only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c or at least one item (piece) of a, b, and c may indicate one of the following cases: Only a exists, only b exists, only c exists, both a and b exist, both a and c exist, both b and c exist, and a, b, and c all exist, where a, b, and c may be singular or plural.

In addition, unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, first eDRX and second eDRX are merely used to distinguish between different eDRX, but do not indicate different priorities or importance degrees of the two types of eDRX.

It should be noted that in this application, the terms such as "example" or "for example" are used to represent giving an example, an illustration, or a description. Any embodiment or design scheme described as "example" or "for example" in this application should not be explained as being more preferred or having more advantages than another embodiment or design scheme. Exactly, use of the term such as "example" or "for example" is intended to present a related concept in a specific manner.

The terms "including", "having", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

The foregoing describes some terms in embodiments of this application. The following describes an architecture of a network system to which the method provided in this application is applied.

A communication method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5G) communication system, an LTE and 5G hybrid architecture, a 5G new radio (new radio, NR) system, and a 6G system or a new communication system that emerges in future communication development. The communication system in this application may alternatively be a machine-to-machine (machine-to-machine, M2M) network, a non-terrestrial network (non-terrestrial network, NTN), or another network.

The communication method provided in embodiments of this application may be applied to a system including a terminal device and an access network device. The system may further include a core network device. Any two access network devices in the communication system may be connected to a same core network device, or may be connected to different core network devices.

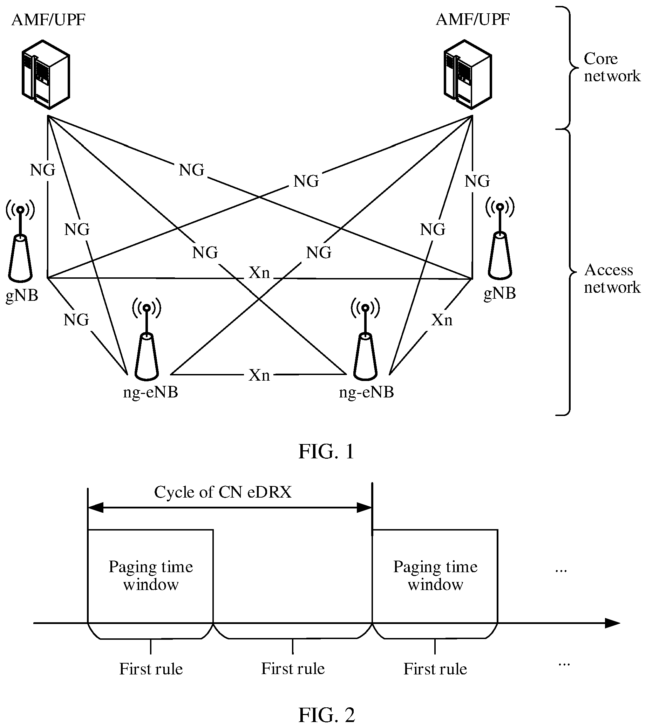

The communication system may be a 5G NR communication system. An interface between the core network device and the access network device is an NG interface, and different access network devices are connected through Xn interfaces. For example, the access network device is a gNB or an ng-eNB, and the core network device is an access and mobility management function (access and mobility management function, AMF)/a user plane function (user plane function, UPF). A connection relationship between the AMF/UPF and the access network device and connection relationships between different AMFs/UPFs and access network devices may be shown in FIG. 1.

The terminal device may be a device having a wireless transceiver function or a chip that can be disposed in any device, or may be referred to as a user equipment (user equipment, UE), an access terminal, a subscriber unit, a subscriber station, a mobile station, a remote station, a remote terminal, a mobile device, a user terminal, a wireless communication device, a user agent, or a user apparatus. The terminal device in embodiments of this application may be a mobile phone (mobile phone), a tablet computer (Pad), a computer with a wireless transceiver function, an X reality (X reality, XR) device (such as a virtual reality (virtual reality, VR) device, a mobile application augmented reality (augmented reality, AR) device, or a mixed reality technology (mixed reality, MR)), a wireless terminal in industrial control (industrial control), a wireless terminal in self driving (self driving), a wireless terminal in video surveillance, a wearable terminal device, or the like. The terminal device may alternatively be an enhanced mobile broadband (enhanced Mobile Broadband, eMBB) UE, an ultra-reliable and low latency communication (ultra-reliable and low latency communication, URLLC) UE, an unmanned aerial vehicle, another internet of things (internet of things, IoT) device, a positioning device, or the like.

The access network device may be an apparatus configured to implement a function of the access network device. The access network device may be a device that communicates with a terminal device over an air interface in an access network through one or more cells. For example, the access network device may be a next generation NodeB (next Generation NodeB, gNB) in a new radio (new radio, NR) system, an evolved NodeB (evolved NodeB, eNB) in a long term evolution (long term evolution, LTE) system, or the like. The access network device may alternatively be an apparatus that can support the access network device in implementing a function of the access network device, for example, a chip system. The apparatus may be mounted in the access network device.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following describes technical features in embodiments of this application.

A terminal device and a network may have inconsistent understandings on a status of the terminal device. For example, the terminal device considers that the terminal device is in an RRC_INACTIVE state, but the network considers that the terminal device is in an RRC_IDLE state. For another example, the terminal device considers that the terminal device is in an RRC_IDLE state, and the network considers that the terminal device is in an RRC_INACTIVE state. The terminal device in the RRC_IDLE state and the terminal device in the RRC_INACTIVE state determine a DRX cycle in different manners. As a result, the terminal device cannot be paged by the network.

For example, the terminal device in the RRC_IDLE state and the terminal device in the RRC_INACTIVE state determine a DRX cycle in different manners. In this case, PO indexes calculated by the network and the terminal device are different. As a result, a PO for paging by the network is different from a PO for monitoring by the terminal device, and the terminal device cannot be paged by the network.

For another example, the terminal device in the RRC_IDLE state and the terminal device in the RRC_INACTIVE state determine a DRX cycle in different manners. In this case, PEI-Os calculated by the network and the terminal device are different. As a result, a PEI-O for sending a PEI by the network is different from a PEI-O for monitoring by the terminal device, the terminal device cannot receive the PEI from the network, and cannot be indicated by the network to monitor a PO, that is, the terminal device cannot be paged by the network.

For still another example, the terminal device in the RRC_IDLE state and the terminal device in the RRC_INACTIVE state determine a DRX cycle in different manners. In this case, a group number of a terminal device group calculated by the network is different from that calculated by the terminal device. As a result, a paged group indicated by the network in a PEI is not a group to which the terminal device actually belongs, and the terminal device cannot be indicated by the network to monitor a PO, that is, the terminal device cannot be paged by the network.

A possible solution for this problem is: The terminal device in the RRC_INACTIVE state determines a DRX cycle according to a rule for determining a DRX cycle by the terminal device in the RRC_IDLE state. However, the terminal device in the RRC_IDLE state performs monitoring only inside a paging time window, and the terminal device in the RRC_INACTIVE state needs to perform monitoring inside the paging time window and outside the paging time window. Therefore, the terminal device in the RRC_INACTIVE state cannot determine a DRX cycle outside the paging time window.

In view of this, embodiments of this application provide a communication method and apparatus. A rule for determining a DRX cycle outside a paging time window by a terminal device in an RRC_INACTIVE state is specified, so that a same PO can be determined by an access network device and the terminal device according to a same rule. This can increase a probability that the terminal device is paged by the access network device. The method and the apparatus are based on a same concept. The method and the apparatus have a similar problem-resolving principle. Therefore, mutual reference may be made to implementations of the apparatus and the method. Repeated parts are not described again.

The following describes the method provided in embodiments of this application in detail with reference to the accompanying drawings. In this application, first eDRX is configured by a core network device. The first eDRX may also be referred to as CN eDRX. Second eDRX is configured by the access network device. The second eDRX may also be referred to as RAN eDRX. For ease of understanding, in the following, the first eDRX is referred to as CN eDRX, and the second eDRX is referred to as RAN eDRX.

Embodiment 1

This application may be applied to a scenario in which a cycle of CN eDRX of the terminal device is greater than or equal to maximum timing duration supported by a system frame number. For example, assuming that the maximum timing duration supported by the system frame number is 10.24s, this application may be applied to a scenario in which the cycle of the CN eDRX of the terminal device is greater than or equal to 10.24s.

Optionally, in this scenario, RAN eDRX may be configured by the access network device for the terminal device, and a cycle of the RAN eDRX may be less than or equal to the maximum timing duration supported by the system frame number. For example, assuming that the maximum timing duration supported by the system frame number is 10.24s, the cycle of the RAN eDRX may be less than or equal to 10.24s.

Alternatively, in this scenario, RAN eDRX is not configured by the access network device for the terminal device.

The following first describes a solution for determining a DRX cycle of the terminal device in the RRC_INACTIVE state.

As shown in FIG. 2, the terminal device in the RRC_INACTIVE state may determine a first DRX cycle outside a paging time window of the CN eDRX according to a first rule. The first rule is used to determine a DRX cycle of a terminal device in an RRC_IDLE state inside the paging time window of the CN eDRX.

Optionally, the terminal device in the RRC_INACTIVE state may determine a first DRX cycle inside the paging time window of the CN eDRX according to the first rule.

For example, the first rule may be:
If a specific DRX cycle is configured by the core network device for the terminal device, the first DRX cycle may be the minimum of the specific DRX cycle and a default DRX cycle. In other words, first DRX cycle = min{specific DRX cycle configured by the core network device, default DRX cycle}. The specific DRX cycle configured by the core network device may be a cycle configured by the core network device for the terminal device. The specific DRX cycle configured by the core network device may also be referred to as a specific DRX cycle configured by an upper layer (upper layer). The default DRX cycle may be a DRX cycle broadcast by the access network device.

Alternatively, if a specific DRX cycle is not configured by the core network device for the terminal device, the first DRX cycle is a default DRX cycle.

The following separately describes a paging process with reference to the terminal device and the access network device.

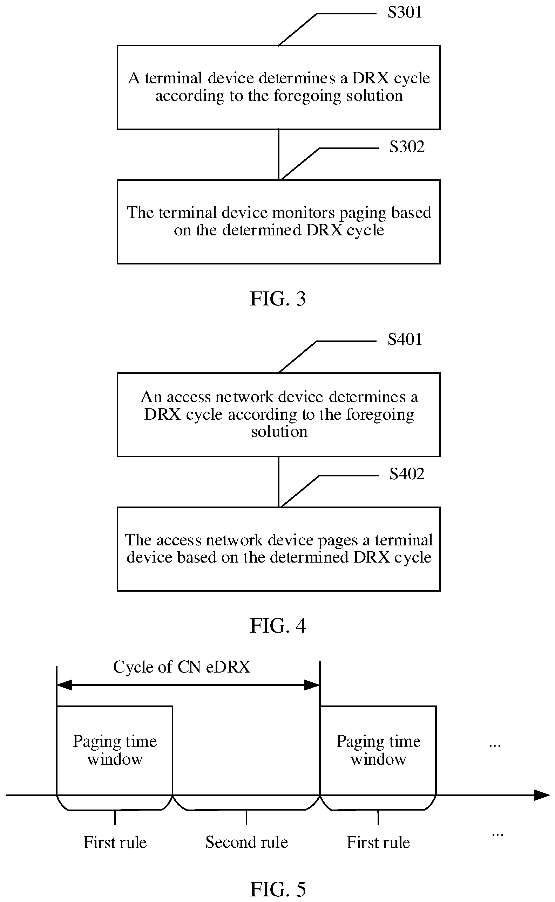

A paging process on the terminal device side in the RRC_INACTIVE state is shown in FIG. 3.

S301: The terminal device determines the DRX cycle according to the foregoing solution.

Specifically, the terminal device may determine the DRX cycle inside the paging time window of the CN eDRX according to the foregoing first rule.

The terminal device may determine the DRX cycle outside the paging time window of the CN eDRX according to the first rule.

S302: The terminal device monitors paging based on the determined DRX cycle.

Specifically, the terminal device may determine a first parameter based on the DRX cycle outside the paging time window of the CN eDRX, and monitor the paging outside the paging time window of the CN eDRX based on the first parameter. The first parameter may include at least one of the following parameters: a PO index, a PEI-O associated with a PO of the terminal device, and a group number of a terminal device group to which the terminal device belongs.

For example, the first parameter is the PO index. The terminal device may determine a PO based on the PO index, and perform monitoring on the PO.

For example, the first parameter is the PEI-O, and the terminal device may monitor a PEI based on the PEI-O. If the PEI is received, monitoring is performed on a PO associated with the PEI. Specifically, if the PEI is received and the PEI indicates the terminal device to monitor paging, monitoring is performed on the PO associated with the PEI. If the PEI is received and the PEI does not indicate the terminal device to monitor paging, monitoring may not be performed on a PO associated with the PEI. If no PEI is received, monitoring may be performed on a PO associated with the PEI.

For example, the first parameter is the group number of the terminal device group. The terminal device may compare, with a terminal device group determined by the terminal device, a terminal device group that is indicated by a received PEI to monitor paging, to determine whether the PEI indicates the terminal device group to which the terminal device belongs to monitor paging. For example, if the terminal device group that is indicated by the received PEI to monitor paging includes the terminal device group determined by the terminal device, the PEI indicates the terminal device group to which the terminal device belongs to monitor paging, and monitoring may be performed on a PO associated with the PEI. If the terminal device group that is indicated by the received PEI to monitor paging does not include the terminal device group determined by the terminal device, monitoring may not be performed on a PO associated with the PEI.

The terminal device may determine a second parameter based on the DRX cycle inside the paging time window of the CN eDRX, and monitor paging inside the paging time window of the CN eDRX based on the second parameter. The second parameter may include at least one of the following parameters: a PO index, a PEI-O associated with a PO of the terminal device, and a group number of a terminal device group to which the terminal device belongs.

For a process in which the terminal device monitors paging inside the paging time window of the CN eDRX based on the second parameter and a process in which the terminal device monitors paging inside the paging time window of the CN eDRX based on the first parameter, refer to the foregoing related descriptions. Details are not described herein again.

A process in which the access network device pages the terminal device in the RRC_INACTIVE state is shown in FIG. 4.

S401: The access network device determines the DRX cycle according to the foregoing solution.

Specifically, the access network device may determine the DRX cycle of the terminal device in the RRC_INACTIVE state inside the paging time window of the CN eDRX according to the foregoing first rule.

The access network device may determine the DRX cycle of the terminal device in the RRC_INACTIVE state outside the paging time window of the CN eDRX according to the foregoing first rule.

S402: The access network device pages the terminal device based on the determined DRX cycle.

Specifically, the access network device may determine a first parameter outside the paging time window of the CN eDRX based on the DRX cycle of the terminal device in the RRC_INACTIVE state outside the paging time window of the CN eDRX, and page the terminal device outside the paging time window of the CN eDRX based on the first parameter. The first parameter may include at least one of the following parameters: a PO index, a PEI-O associated with a PO of the terminal device, and a group number of a terminal device group to which the terminal device belongs.

The access network device may determine a second parameter inside the paging time window of the CN eDRX based on the DRX cycle of the terminal device in the RRC_INACTIVE state inside the paging time window of the CN eDRX, and page the terminal device inside the paging time window of the CN eDRX based on the second parameter. The second parameter may include at least one of the following parameters: a PO index, a PEI-O associated with a PO of the terminal device, and a group number of a terminal device group to which the terminal device belongs.

Because the terminal device does not perform monitoring outside the paging time window when the terminal device is in the RRC_IDLE state, if the terminal device in the RRC_INACTIVE state uses a rule for determining a DRX cycle by the terminal device in the RRC_IDLE state, monitoring cannot be performed outside the paging time window. In this embodiment of this application, the rule for determining the DRX cycle outside the paging time window by the terminal device in the RRC_INACTIVE state is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

In addition, the terminal device in the RRC_INACTIVE state also uses, outside the paging time window, a rule (namely, the first rule) for determining a DRX cycle of the terminal device in the RRC_IDLE state inside the paging time window, so that the terminal device in the RRC_INACTIVE state uses a same rule inside the paging time window and outside the paging time window. For the terminal device and a network, complexity of implementing this solution is low.

In addition, when determining the DRX cycle inside the paging time window of the CN eDRX, the terminal device in the RRC_INACTIVE state uses the rule for determining the DRX cycle inside the paging time window of the CN eDRX by the terminal device in the RRC_IDLE state. In this way, even if the access network device and the terminal device have inconsistent understandings on a status of the terminal device, a same DRX cycle can be determined by the access network device and the terminal device according to a same rule, so that a PO index determined by the access network device is the same as that determined by the terminal device. In this way, a PO for paging by the access network device inside the paging time window can also be consistent with a PO for monitoring by the terminal device inside the paging time window, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

Embodiment 2

A difference between Embodiment 2 and Embodiment 1 lies in that rules for determining a DRX cycle of the terminal device in the RRC_INACTIVE state outside a paging time window of CN eDRX are different. To be specific, the rule for determining the DRX cycle of the terminal device in the RRC_INACTIVE state outside the paging time window of the CN eDRX in Embodiment 1 is the first rule, and the rule for determining the DRX cycle of the terminal device in the RRC_INACTIVE state outside the paging time window of the CN eDRX in Embodiment 2 is a second rule.

This application may be applied to a scenario in which a cycle of the CN eDRX of the terminal device is greater than or equal to maximum timing duration supported by a system frame number. For example, assuming that the maximum timing duration supported by the system frame number is 10.24s, this application may be applied to a scenario in which the cycle of the CN eDRX of the terminal device is greater than or equal to 10.24s.

Optionally, in this scenario, RAN eDRX may be configured by the access network device for the terminal device, and a cycle of the RAN eDRX may be less than or equal to the maximum timing duration supported by the system frame number. For example, assuming that the maximum timing duration supported by the system frame number is 10.24s, the cycle of the RAN eDRX may be less than or equal to 10.24s.

Alternatively, in this scenario, RAN eDRX is not configured by the access network device for the terminal device.

Specifically, as shown in FIG. 5, the terminal device in the RRC_INACTIVE state may determine a first DRX cycle outside the paging time window of the CN eDRX according to the second rule. The second rule is used to determine the DRX cycle of the terminal device in the inactive state outside the paging time window of the CN eDRX.

Optionally, the terminal device in the RRC_INACTIVE state may determine a first DRX cycle inside the paging time window of the CN eDRX according to a first rule.

For example, for the first rule, refer to related descriptions in Embodiment 1. Details are not described herein again.

The second rule may be:

If the RAN eDRX is configured by the access network device for the terminal device, and the cycle of the RAN eDRX is less than or equal to the maximum timing duration supported by the system frame number, the first DRX cycle is the cycle of the RAN eDRX. In other words, first DRX cycle = cycle of the RAN eDRX.

Alternatively, if the RAN eDRX is not configured by the access network device for the terminal device, the first DRX cycle is a specific DRX cycle configured by the access network device. In other words, first DRX cycle = specific DRX cycle configured by the access network device. The specific DRX cycle configured by the access network device may be a specific DRX cycle configured by the access network device for the terminal device. The specific DRX cycle configured by the access network device may also be referred to as a specific DRX cycle configured by RRC, a RAN paging cycle, or the like.

For details of a paging process on the terminal device side in the RRC_INACTIVE state and a process in which the access network device pages the terminal device in the RRC_INACTIVE state, refer to related descriptions in Embodiment 1. The details are not described herein again.

Because the terminal device does not perform monitoring outside the paging time window when the terminal device is in the RRC_IDLE state, if the terminal device in the RRC_INACTIVE state uses a rule for determining a DRX cycle by the terminal device in the RRC_IDLE state, monitoring cannot be performed outside the paging time window. In this embodiment of this application, the rule for determining the DRX cycle outside the paging time window by the terminal device in the RRC_INACTIVE state is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

In addition, in this application, the terminal device in the RRC_INACTIVE state still uses, outside the paging time window, an original rule for determining the DRX cycle of the terminal device in the RRC_INACTIVE state outside the paging time window. For the terminal device and a network, complexity of implementing this solution is low.

In addition, when determining the DRX cycle inside the paging time window of the CN eDRX, the terminal device in the RRC_INACTIVE state uses the rule for determining the DRX cycle inside the paging time window of the CN eDRX by the terminal device in the RRC_IDLE state. In this way, even if the access network device and the terminal device have inconsistent understandings on a status of the terminal device, a same DRX cycle can be determined by the access network device and the terminal device according to a same rule, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

Embodiment 3

A difference between Embodiment 3 and the foregoing two embodiments lies in that in the scenarios to which the foregoing two embodiments are applied, the RAN eDRX whose cycle is less than or equal to the maximum timing duration supported by the system frame number is configured by the access network device for the terminal device, or the RAN eDRX is not configured by the access network device for the terminal device, while in a scenario to which Embodiment 3 is applied, RAN eDRX whose cycle is greater than the maximum timing duration supported by the system frame number is configured by the access network device for the terminal device. For example, assuming that the maximum timing duration supported by the system frame number is 10.24s, the RAN eDRX whose cycle is greater than 10.24s is configured by the access network device for the terminal device.

In the scenario to which Embodiment 3 is applied, a cycle of CN eDRX of the terminal device is greater than or equal to the maximum timing duration supported by the system frame number. For example, assuming that the maximum timing duration supported by the system frame number is 10.24s, the cycle of the CN eDRX of the terminal device is greater than or equal to 10.24s.

In the scenario to which Embodiment 3 is applied, the terminal device may have two types of paging time windows: a paging time window of the CN eDRX and a paging time window of the RAN eDRX. For locations of the two types of paging time windows, the following three cases are possible:

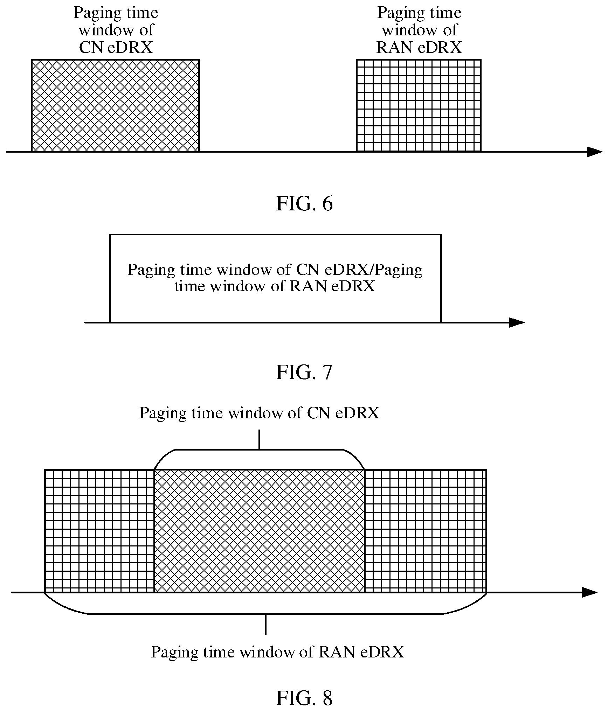

Case 1: The paging time window of the CN eDRX completely does not overlap the paging time window of the RAN eDRX, as shown in FIG. 6.
In this case, a size relationship between the paging time window of the CN eDRX and the paging time window of the RAN eDRX is not limited in this application. In this case, the paging time window of the CN eDRX may be located before the paging time window of the RAN eDRX, or may be located after the paging time window of the RAN eDRX. This is not limited in this application. In FIG. 6, only an example in which the paging time window of the CN eDRX is located before the paging time window of the RAN eDRX is used for illustration.

Case 2: The paging time window of the CN eDRX completely overlaps the paging time window of the RAN eDRX.

In a first example, a start position, an end position, and a length of the paging time window of the CN eDRX are the same as those of the paging time window of the RAN eDRX, as shown in FIG. 7.

In a second example, the paging time window of the CN eDRX is included in the paging time window of the RAN eDRX. In other words, both a start position and an end position of the paging time window of the CN eDRX are within a range of the paging time window of the RAN eDRX, and a length of the paging time window of the CN eDRX is less than a length of the paging time window of the RAN eDRX, as shown in FIG. 8.

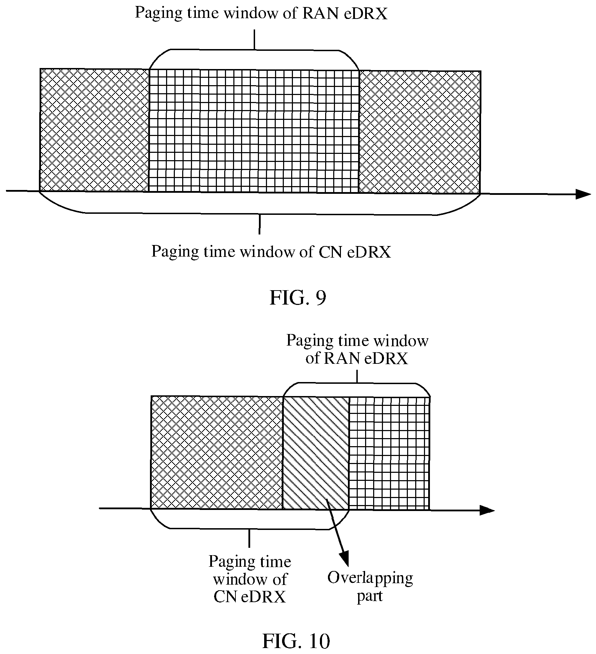

In a third example, the paging time window of the RAN eDRX is included in the paging time window of the CN eDRX. In other words, both a start position and an end position of the paging time window of the RAN eDRX are within a range of the paging time window of the CN eDRX, and a length of the paging time window of the RAN eDRX is less than a length of the paging time window of the CN eDRX, as shown in FIG. 9.

Case 3: The paging time window of the CN eDRX partially overlaps the paging time window of the RAN eDRX.

In an example, an end position of the paging time window of the CN eDRX is after a start position of the paging time window of the RAN eDRX and before an end position of the paging time window of the RAN eDRX, and a start position of the paging time window of the CN eDRX is before the start position of the paging time window of the RAN eDRX, as shown in FIG. 10.

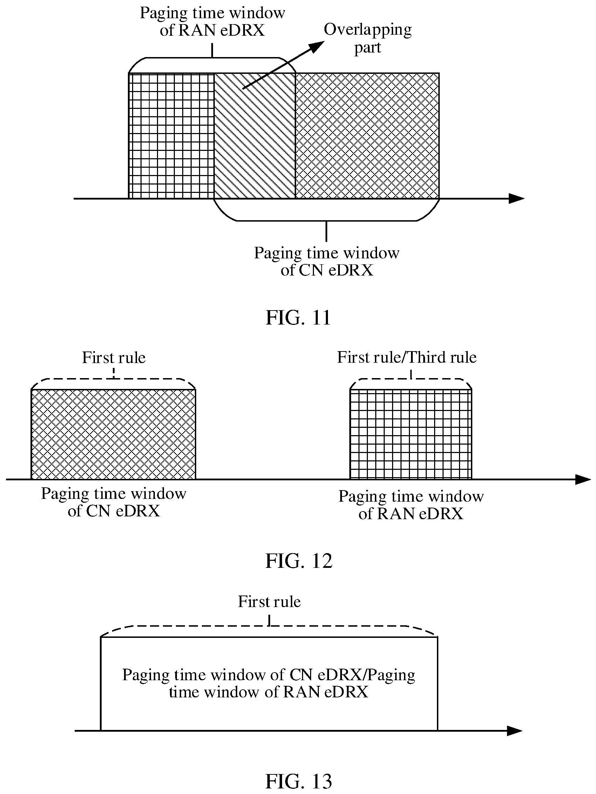

In another example, an end position of the paging time window of the RAN eDRX is after a start position of the paging time window of the CN eDRX and before an end position of the paging time window of the CN eDRX, and a start position of the paging time window of the RAN eDRX is before the start position of the paging time window of the CN eDRX, as shown in FIG. 11.

It should be noted that, because the cycle of the CN eDRX and the cycle of the RAN eDRX may be different, that is, occurrence frequency of the paging time window of the CN eDRX is different from occurrence frequency of the paging time window of the RAN eDRX, the foregoing three cases may be for only some paging time windows of the CN eDRX/paging time windows of the RAN eDRX.

The following first describes a solution for determining a DRX cycle of the terminal device in the RRC_INACTIVE state.

The terminal device in the RRC_INACTIVE state may determine a DRX cycle inside the paging time window of the CN eDRX according to a first rule. The terminal device may determine a DRX cycle inside the paging time window of the RAN eDRX according to the first rule or a third rule. It should be understood that the terminal device and the access network device use a same rule for the DRX cycle inside the paging time window of the RAN eDRX. For example, both the terminal device and the access network device determine the DRX cycle inside the paging time window of the RAN eDRX according to the first rule. For another example, both the terminal device and the access network device determine the DRX cycle inside the paging time window of the RAN eDRX according to the third rule. Optionally, a first terminal device may not monitor paging outside the paging time window of the RAN eDRX and the paging time window of the CN eDRX.

For the first rule, refer to related descriptions in the foregoing two embodiments. Details are not described herein again. The third rule is used to determine the DRX cycle of the terminal device in the RRC_INACTIVE state inside the paging time window of the RAN eDRX.

For example, the third rule may be: The DRX cycle inside the paging time window of the RAN eDRX is a specific DRX cycle configured by the access network device. The specific DRX cycle configured by the access network device may also be referred to as a specific DRX cycle configured by RRC, a RAN paging cycle, or the like.

Alternatively, the third rule may be: The DRX cycle inside the paging time window of the RAN eDRX is the minimum of a specific DRX cycle configured by the access network device and a default DRX cycle. In other words, DRX cycle inside the paging time window of the RAN eDRX = min{specific DRX cycle configured by the access network device, default DRX cycle}. The default DRX cycle may be a DRX cycle broadcast by the access network device.

Alternatively, the third rule may be: The DRX cycle inside the paging time window of the RAN eDRX is the minimum of a specific DRX cycle configured by the access network device, a specific DRX cycle configured by the core network device, and a default DRX cycle. In other words, DRX cycle inside the paging time window of the RAN eDRX = min {specific DRX cycle configured by the access network device, specific DRX cycle configured by the core network device, default DRX cycle}. The specific DRX cycle configured by the core network device may also be referred to as a specific DRX cycle configured by an upper layer.

For Case 1, with reference to the example shown in FIG. 6, a solution in which the terminal device in the RRC_INACTIVE state determines the DRX cycle may be shown in FIG. 12.

For the first example and the third example in Case 2, because the paging time window of the RAN eDRX is included in the paging time window of the CN eDRX, when the terminal device in the RRC_INACTIVE state determines the DRX cycle, the rule for determining the DRX cycle inside the paging time window of the RAN eDRX may follow the rule for determining the DRX cycle inside the paging time window of the CN eDRX.

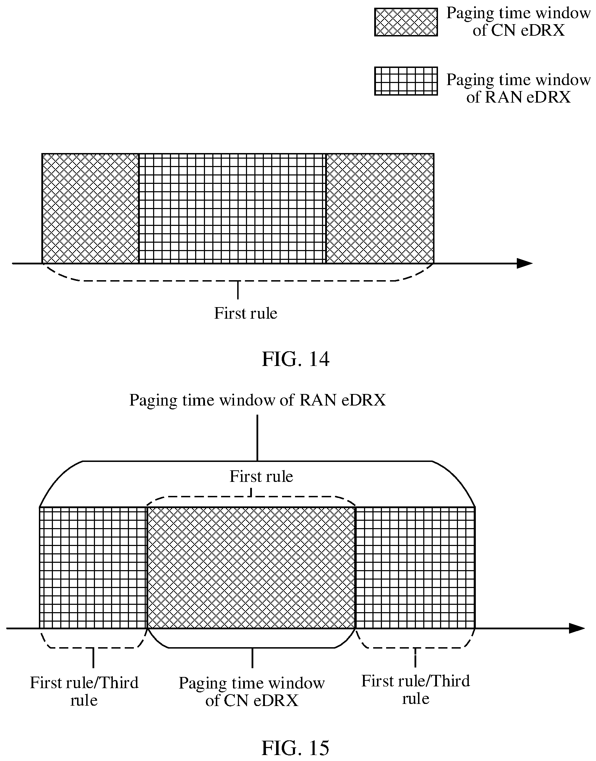

For example, with reference to the example shown in FIG. 7, a solution in which the terminal device in the RRC_INACTIVE state determines the DRX cycle may be shown in FIG. 13. With reference to the example shown in FIG. 9, a solution in which the terminal device in the RRC_INACTIVE state determines the DRX cycle may be shown in FIG. 14.

For Case 3 and the second example in Case 2, when determining the DRX cycle inside the paging time window of the RAN eDRX according to the first rule or the third rule, the terminal device/access network device may specifically determine the DRX cycle in a first time period inside the paging time window of the RAN eDRX according to the first rule or the third rule. The first time period does not belong to the paging time window of the CN eDRX. In other words, the first time period is a part that is inside the paging time window of the RAN eDRX and that does not overlap with the CN eDRX.

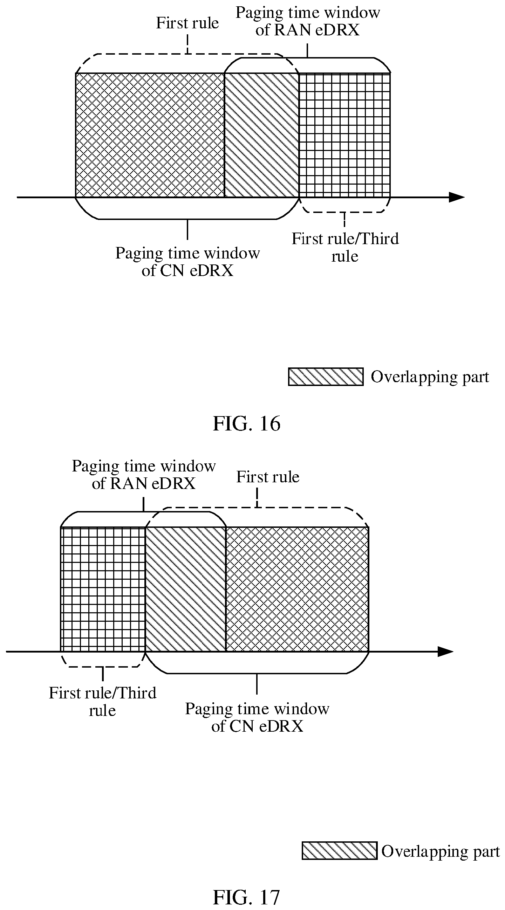

For example, with reference to the example shown in FIG. 8, a solution in which the terminal device in the RRC_INACTIVE state determines the DRX cycle may be shown in FIG. 15. With reference to the example shown in FIG. 10, a solution in which the terminal device in the RRC_INACTIVE state determines the DRX cycle may be shown in FIG. 16. With reference to the example shown in FIG. 11, a solution in which the terminal device in the RRC_INACTIVE state determines the DRX cycle may be shown in FIG. 17.

The following separately describes a paging process with reference to the terminal device and the access network device.

A paging process on the terminal device side in the RRC_INACTIVE state may be shown in FIG. 3.

Specifically, in S301, the terminal device may determine the DRX cycle inside the paging time window of the CN eDRX according to the foregoing first rule. The terminal device may determine the DRX cycle inside the paging time window of the RAN eDRX according to the foregoing first rule or third rule.

In S302, the terminal device may determine a parameter A inside the paging time window of the CN eDRX based on the DRX cycle inside the paging time window of the CN eDRX, and monitor paging inside the paging time window of the CN eDRX based on the parameter A. The parameter A may include at least one of the following parameters: a PO index, a PEI-O associated with a PO of the terminal device, and a group number of a terminal device group to which the terminal device belongs.

The terminal device may determine a parameter B inside the paging time window of the RAN eDRX based on the DRX cycle inside the paging time window of the RAN eDRX, and monitor paging inside the paging time window of the RAN eDRX based on the parameter B. The parameter B may include at least one of the following parameters: a PO index, a PEI-O associated with a PO of the terminal device, and a group number of a terminal device group to which the terminal device belongs.

A process in which the access network device pages the terminal device in the RRC_INACTIVE state is shown in FIG. 4.

Specifically, in S401, the access network device may determine the DRX cycle of the terminal device in the RRC_INACTIVE state inside the paging time window of the CN eDRX according to the foregoing first rule. The access network device may determine the DRX cycle inside the paging time window of the RAN eDRX according to the foregoing first rule or third rule.

In S402, the access network device may determine a parameter A inside the paging time window of the CN eDRX based on the DRX cycle of the terminal device in the RRC_INACTIVE state inside the paging time window of the CN eDRX, and page the terminal device inside the paging time window of the CN eDRX based on the parameter A. The parameter A may include at least one of the following parameters: a PO index, a PEI-O associated with a PO of the terminal device, and a group number of a terminal device group to which the terminal device belongs.

The access network device may determine a parameter B inside the paging time window of the RAN eDRX based on the DRX cycle of the terminal device in the RRC_INACTIVE state inside the paging time window of the RAN eDRX, and page the terminal device inside the paging time window of the RAN eDRX based on the parameter B. The parameter B may include at least one of the following parameters: a PO index, a PEI-O associated with a PO of the terminal device, and a group number of a terminal device group to which the terminal device belongs.

The parameter A corresponds to the first parameter in the third aspect and the fourth aspect in the summary, and the parameter B corresponds to the second parameter in the third aspect and the fourth aspect in the summary.

Because the terminal device is not configured with the RAN eDRX when the terminal device is in the RRC_IDLE state, if the terminal device in the RRC_INACTIVE state uses a rule for determining a DRX cycle by the terminal device in the RRC_IDLE state, monitoring cannot be performed inside the paging time window of the RAN eDRX. In this embodiment of this application, for a scenario in which the RAN eDRX is longer than 10.24s, a rule for determining a DRX cycle of the terminal device in the RRC_INACTIVE state inside the paging time window of the RAN eDRX is specified, so that a PO index determined by the access network device is the same as that determined by the terminal device. In this way, a PO for paging by the access network device can also be consistent with a PO for monitoring by the terminal device, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

Specifically, the terminal device in the RRC_INACTIVE state uses, inside both the paging time window of the RAN eDRX and the paging time window of the CN eDRX, a rule (namely, the first rule) for determining a DRX cycle of the terminal device in the RRC_IDLE state inside the paging time window, so that the terminal device in the RRC_INACTIVE state uses a same rule inside the paging time window of the RAN eDRX and the paging time window of the CN eDRX. For the terminal device and a network, complexity of implementing this solution is low.

Alternatively, the terminal device in the RRC_INACTIVE state still uses, inside the paging time window of the RAN eDRX, an original rule (namely, the third rule) for determining the DRX cycle of the terminal device in the RRC_INACTIVE state inside the paging time window of the RAN eDRX. For the terminal device and a network, complexity of implementing this solution is low.

In addition, when determining the DRX cycle inside the paging time window of the CN eDRX, the terminal device in the RRC_INACTIVE state uses the rule for determining the DRX cycle inside the paging time window of the CN eDRX by the terminal device in the RRC_IDLE state. In this way, even if the access network device and the terminal device have inconsistent understandings on a status of the terminal device, a same DRX cycle can be determined by the access network device and the terminal device according to a same rule, so that a PO index determined by the access network device is the same as that determined by the terminal device. In this way, a PO for paging by the access network device inside the paging time window can also be consistent with a PO for monitoring by the terminal device inside the paging time window, so that the terminal device can be paged by the access network device. Alternatively, a PEI occasion determined by the access network device is consistent with that determined by the terminal device, so that the terminal device can receive a PEI on the PEI occasion, and can be paged by a network based on the PEI. Alternatively, a group number of a terminal device group determined by the access network device is consistent with that determined by the terminal device, so that the terminal device can accurately determine whether the terminal device is indicated to monitor paging, to improve a probability that the terminal device is paged by the access network device.

Because the terminal device is not configured with the RAN eDRX when the terminal device is in the RRC_IDLE state, a location of the paging time window of the RAN eDRX cannot be determined. However, both the terminal device in the RRC_IDLE state and the terminal device in the RRC_INACTIVE state are configured with the CN eDRX. In the foregoing manner, a rule (namely, the first rule) for determining a DRX cycle of the terminal device in the RRC_IDLE state inside the paging time window is used in an overlapping part between the paging time window of the RAN eDRX and the paging time window of the CN eDRX, in other words, the rule used inside the paging time window of the CN eDRX is used in the overlapping part between the paging time window of the RAN eDRX and the paging time window of the CN eDRX, so that the terminal device in the RRC_IDLE state and the terminal device in the RRC_INACTIVE state can determine same DRX. Even if the network and the terminal device have inconsistent understandings on a status of the terminal device, determined DRX cycles are the same, so that the probability that the terminal device is paged by the access network device can be increased.

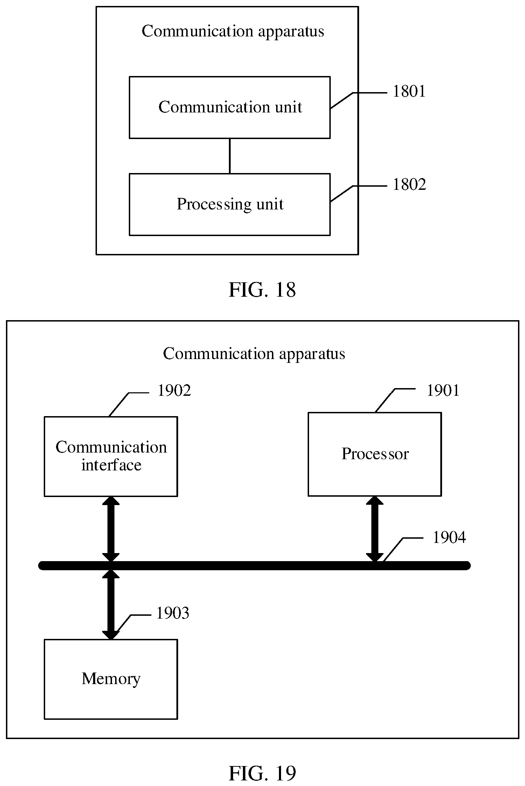

Based on a same inventive concept as the method embodiments, an embodiment of this application provides a communication apparatus. A structure of the communication apparatus may be shown in FIG. 18. The communication apparatus includes a communication unit 1801 and a processing unit 1802.

In an implementation, the communication apparatus may be specifically configured to implement the method performed by the terminal device in Embodiment 1 or 2. The apparatus may be the terminal device, or may be a chip or a chip set in the terminal device or a part that is of the chip and that is configured to perform a related method function. The processing unit 1802 is configured to: determine a first DRX cycle outside a paging time window of first eDRX according to a first rule or a second rule, where the first rule is used to determine a DRX cycle of a terminal device in an idle state inside the paging time window of the first eDRX, and the second rule is used to determine a DRX cycle of a terminal device in an inactive state outside the paging time window of the first eDRX; and the first eDRX is configured by a core network device; and monitor paging outside the paging time window of the first eDRX in the first DRX cycle through the communication unit 1801.

For example, the first rule is: If a first specific DRX cycle is configured by the core network device for a first terminal device, the first DRX cycle is the minimum of the first specific DRX cycle and a default DRX cycle; or if a first specific DRX cycle is not configured by the core network device for a first terminal device, the first DRX cycle is a default DRX cycle.

For example, second eDRX is configured by an access network device for the first terminal device, and a cycle of the second eDRX is less than or equal to maximum timing duration supported by a system frame number; or second eDRX is not configured by an access network device for the first terminal device.

For example, the second rule is: If second eDRX is configured by the access network device for the first terminal device, and a cycle of the second eDRX is less than or equal to maximum timing duration supported by a system frame number, the first DRX cycle is the cycle of the second eDRX; or if second eDRX is not configured by the access network device for the first terminal device, the first DRX cycle is a second specific DRX cycle configured by the access network device.

Optionally, when monitoring paging outside the paging time window of the first eDRX based on the first DRX cycle, the processing unit 1802 is specifically configured to: determine a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and monitor the paging outside the paging time window of the first eDRX based on the first parameter.

Optionally, the processing unit 1802 is further configured to: determine a second DRX cycle inside the paging time window of the first eDRX according to the first rule; and monitor paging inside the paging time window of the first eDRX based on the second DRX cycle.

Optionally, when monitoring paging inside the paging time window of the first eDRX based on the second DRX cycle, the processing unit 1802 is specifically configured to: determine a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and monitor the paging inside the paging time window of the first eDRX based on the second parameter.

In an implementation, the communication apparatus may be specifically configured to implement the method performed by the access network device in Embodiment 1 or 2. The apparatus may be the access network device, or may be a chip or a chip set in the access network device or a part that is of the chip and that is configured to perform a related method function. The processing unit 1802 is configured to: determine a first DRX cycle of a first terminal device in an inactive state outside a paging time window of first eDRX according to a first rule or a second rule, where the first rule is used to determine a DRX cycle of a terminal device in an idle state inside the paging time window of the first eDRX, and the second rule is used to determine a DRX cycle of a terminal device in an inactive state outside the paging time window of the first eDRX; and the first eDRX is configured by a core network device; and page the first terminal device outside the paging time window of the first eDRX in the first DRX cycle through the communication unit 1801.

For example, the first rule is: If a first specific DRX cycle is configured by the core network device for the first terminal device, the first DRX cycle is the minimum of the first specific DRX cycle and a default DRX cycle; or if a first specific DRX cycle is not configured by the core network device for the first terminal device, the first DRX cycle is a default DRX cycle.

For example, second eDRX is configured by the access network device for the first terminal device, and a cycle of the second eDRX is less than or equal to maximum timing duration supported by a system frame number; or second eDRX is not configured by the access network device for the first terminal device.

For example, the second rule is: If second eDRX is configured by the access network device for the first terminal device, and a cycle of the second eDRX is less than or equal to maximum timing duration supported by a system frame number, the first DRX cycle is the cycle of the second eDRX; or if second eDRX is not configured by the access network device for the first terminal device, the first DRX cycle is a second specific DRX cycle configured by the access network device.

Optionally, when paging the first terminal device outside the paging time window of the first eDRX based on the first DRX cycle, the processing unit 1802 is specifically configured to: determine a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and page the first terminal device outside the paging time window of the first eDRX based on the first parameter.

Optionally, the processing unit 1802 is further configured to: determine a second DRX cycle of the first terminal device inside the paging time window of the first eDRX according to the first rule, where the second rule is used to determine the DRX cycle of the terminal device in the idle state inside the paging time window of the first eDRX; and page the first terminal device inside the paging time window of the first eDRX based on the second DRX cycle.

Optionally, when paging the first terminal device inside the paging time window of the first eDRX based on the second DRX cycle, the processing unit 1802 is specifically configured to: determine a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and page the first terminal device inside the paging time window of the first eDRX based on the second parameter.

In an implementation, the communication apparatus may be specifically configured to implement the method performed by the terminal device in Embodiment 3. The apparatus may be the terminal device, or may be a chip or a chip set in the terminal device or a part that is of the chip and that is configured to perform a related method function. The processing unit 1802 is configured to: determine a first DRX cycle inside a paging time window of first eDRX according to a first rule, where the first rule is used to determine a DRX cycle of a terminal device in an idle state inside the paging time window of the first eDRX; and the first eDRX is configured by a core network device; determine a second DRX cycle inside a paging time window of second eDRX according to the first rule or a third rule, where the third rule is used to determine a DRX cycle of a terminal device in an inactive state inside the paging time window of the second eDRX; and the second eDRX is configured by an access network device; monitor paging inside the paging time window of the first eDRX based on the first DRX cycle through the communication unit 1801; and monitor paging inside the paging time window of the second eDRX based on the second DRX cycle through the communication unit 1801.

Optionally, when determining the second DRX cycle inside the paging time window of the second eDRX according to the first rule or the third rule, the processing unit 1802 is specifically configured to: determine the second DRX cycle in a first time period inside the paging time window of the second eDRX according to the first rule or the third rule, where the first time period does not belong to the paging time window of the first eDRX.

For example, the third rule is that the second DRX cycle is a first specific DRX cycle configured by the access network device; the third rule is that the second DRX cycle is the minimum of a first specific DRX cycle configured by the access network device and a default DRX cycle; or the third rule is that the second DRX cycle is the minimum of a first specific DRX cycle configured by the access network device, a second specific DRX cycle configured by the core network device, and a default DRX cycle.

For example, the first rule is: If the second specific DRX cycle is configured by the core network device for a first terminal device, the second DRX cycle is the minimum of the second specific DRX cycle and the default DRX cycle; or if the second specific DRX cycle is not configured by the core network device for a first terminal device, the second DRX cycle is the default DRX cycle.

Optionally, when monitoring paging inside the paging time window of the first eDRX based on the first DRX cycle, the processing unit 1802 is specifically configured to: determine a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and monitor the paging inside the paging time window of the first eDRX based on the first parameter.

Optionally, when monitoring paging inside the paging time window of the second eDRX based on the second DRX cycle, the processing unit 1802 is specifically configured to: determine a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and monitor the paging inside the paging time window of the second eDRX based on the second parameter.

In an implementation, the communication apparatus may be specifically configured to implement the method performed by the access network device in Embodiment 3. The apparatus may be the access network device, or may be a chip or a chip set in the access network device or a part that is of the chip and that is configured to perform a related method function. The processing unit 1802 is configured to: determine a first DRX cycle of a first terminal device in an inactive state inside a paging time window of first eDRX according to a first rule, where the first rule is used to determine a DRX cycle of a terminal device in an idle state inside the paging time window of the first eDRX; and the first eDRX is configured by a core network device; determine a second DRX cycle of the first terminal device inside a paging time window of second eDRX according to the first rule or a third rule, where the third rule is used to determine a DRX cycle of a terminal device in an inactive state inside the paging time window of the second eDRX; and the second eDRX is configured by an access network device; page the first terminal device inside the paging time window of the first eDRX based on the first DRX cycle through the communication unit 1801; and page the first terminal device inside the paging time window of the second eDRX based on the second DRX cycle through the communication unit 1801.

Optionally, when determining the second DRX cycle of the first terminal device inside the paging time window of the second eDRX according to the first rule or the third rule, the processing unit 1802 is specifically configured to: determine the second DRX cycle of the first terminal device in a first time period inside the paging time window of the second eDRX according to the first rule or the third rule, where the first time period does not belong to the paging time window of the first eDRX.

For example, the third rule is that the second DRX cycle is a first specific DRX cycle configured by the access network device; the third rule is that the second DRX cycle is the minimum of a first specific DRX cycle configured by the access network device and a default DRX cycle; or the third rule is that the second DRX cycle is the minimum of a first specific DRX cycle configured by the access network device, a second specific DRX cycle configured by the core network device, and a default DRX cycle.

For example, the first rule is: If the second specific DRX cycle is configured by the core network device for the first terminal device, the second DRX cycle is the minimum of the second specific DRX cycle and the default DRX cycle; or if the second specific DRX cycle is not configured by the core network device for the first terminal device, the second DRX cycle is the default DRX cycle.

Optionally, when paging the first terminal device inside the paging time window of the first eDRX based on the first DRX cycle, the processing unit 1802 is specifically configured to: determine a first parameter based on the first DRX cycle, where the first parameter includes at least one of the following parameters: a paging occasion index, a paging early indication sending occasion associated with a paging occasion of the first terminal device, and a group number of a terminal device group to which the first terminal device belongs; and page the first terminal device inside the paging time window of the first eDRX based on the first parameter.

Optionally, when paging the first terminal device inside the paging time window of the second eDRX based on the second DRX cycle, the processing unit 1802 is specifically configured to: determine a second parameter based on the second DRX cycle, where the second parameter includes at least one of the following parameters: a paging occasion index, a paging early indication sending occasion associated with a paging occasion of the first terminal device, and a group number of a terminal device group to which the first terminal device belongs; and page the first terminal device inside the paging time window of the second eDRX based on the second parameter.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related descriptions in the method embodiments.

In a possible manner, the communication apparatus may be shown in FIG. 19. The apparatus may be a communication device or a chip in the communication device. The communication device may be the terminal device in the foregoing embodiments or the access network device in the foregoing embodiments. The apparatus includes a processor 1901 and a communication interface 1902, and may further include a memory 1903. The processing unit 1802 may be the processor 1901. The communication unit 1801 may be the communication interface 1902.

The processor 1901 may be a CPU, a digital processing unit, or the like. The communication interface 1902 may be a transceiver, an interface circuit such as a transceiver circuit, a transceiver chip, or the like. The apparatus further includes the memory 1903, configured to store a program to be executed by the processor 1901. The memory 1903 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1903 is any other medium that can be used to carry or store expected program code in a form of instructions or a data structure and that can be accessed by a computer, but is not limited thereto.

The processor 1901 is configured to execute program code stored in the memory 1903, and is specifically configured to perform an action of the processing unit 1802. Details are not described in this application again. The communication interface 1902 is specifically configured to perform an action of the communication unit 1801. Details are not described herein again in this application.

In this embodiment of this application, a specific connection medium between the communication interface 1902, the processor 1901, and the memory 1903 is not limited. In this embodiment of this application, the memory 1903, the processor 1901, and the communication interface 1902 are connected through a bus 1904 in FIG. 19, and the bus is represented by using a bold line in FIG. 19. A connection manner between other components is merely an example for description, and is not limited thereto. The bus may be classified into an address bus, a data bus, a control bus, and the like. For ease of representation, the bus is represented by using only one bold line in FIG. 19. However, this does not indicate that there is only one bus or only one type of bus.

An embodiment of the present invention further provides a computer-readable storage medium, configured to store computer software instructions that need to be executed by the foregoing processor. The computer-readable storage medium includes a program that needs to be executed by the foregoing processor.

An embodiment of this application further provides a communication method, including the steps in the embodiment in FIG. 3.

An embodiment of this application further provides a communication method, including the steps in the embodiment in FIG. 4.

An embodiment of this application further provides a communication system, including a communication apparatus configured to implement a function of the terminal device in the embodiment in FIG. 3 and a communication apparatus configured to implement a function of the access network device in the embodiment in FIG. 3.

An embodiment of this application further provides a communication system, including a communication apparatus configured to implement a function of the terminal device in the embodiment in FIG. 4 and a communication apparatus configured to implement a function of the access network device in the embodiment in FIG. 4.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the claims of this application and their equivalent technologies.

**Claims**

1. A communication method, wherein the method is applied to a first terminal device, the first terminal device is in an inactive state, and the method comprises:

   determining a first discontinuous reception DRX cycle outside a paging time window of first extended discontinuous reception eDRX according to a first rule or a second rule, wherein the first rule is used to determine a DRX cycle of a terminal device in an idle state inside the paging time window of the first eDRX, and the second rule is used to determine a DRX cycle of a terminal device in an inactive state outside the paging time window of the first eDRX; and the first eDRX is configured by a core network device; and
   monitoring paging outside the paging time window of the first eDRX based on the first DRX cycle.

2. The method according to claim 1, wherein the first rule is:

   if a first specific DRX cycle is configured by the core network device for the first terminal device, the first DRX cycle is the minimum of the first specific DRX cycle and a default DRX cycle; or
   if a first specific DRX cycle is not configured by the core network device for the first terminal device, the first DRX cycle is a default DRX cycle.

3. The method according to claim 1 or 2, wherein second eDRX is configured by an access network device for the first terminal device, and a cycle of the second eDRX is less than or equal to maximum timing duration supported by a system frame number; or
   second eDRX is not configured by an access network device for the first terminal device.

4. The method according to claim 1, wherein the second rule is:

   if second eDRX is configured by an access network device for the first terminal device, and a cycle of the second eDRX is less than or equal to maximum timing duration supported by a system frame number, the first DRX cycle is the cycle of the second eDRX; or
   if second eDRX is not configured by an access network device for the first terminal device, the first DRX cycle is a second specific DRX cycle configured by the access network device.

5. The method according to any one of claims 1 to 4, wherein the monitoring paging outside the paging time window of the first eDRX based on the first DRX cycle comprises:

determining a first parameter based on the first DRX cycle, wherein the first parameter comprises at least one of the following parameters: a paging occasion index, a paging early indication sending occasion associated with a paging occasion of the first terminal device, and a group number of a terminal device group to which the first terminal device belongs; and

monitoring the paging outside the paging time window of the first eDRX based on the first parameter.

6. The method according to any one of claims 1 to 5, wherein the method further comprises:

determining a second DRX cycle inside the paging time window of the first eDRX according to the first rule; and

monitoring paging inside the paging time window of the first eDRX based on the second DRX cycle.

7. The method according to claim 6, wherein the monitoring paging inside the paging time window of the first eDRX based on the second DRX cycle comprises:

determining a second parameter based on the second DRX cycle, wherein the second parameter comprises at least one of the following parameters: a paging occasion index, a paging early indication sending occasion associated with a paging occasion of the first terminal device, and a group number of a terminal device group to which the first terminal device belongs; and

monitoring the paging inside the paging time window of the first eDRX based on the second parameter.

8. A communication method, wherein the method is applied to an access network device, and the method comprises:

determining a first discontinuous reception DRX cycle of a first terminal device in an inactive state outside a paging time window of first extended discontinuous reception eDRX according to a first rule or a second rule, wherein the first rule is used to determine a DRX cycle of a terminal device in an idle state inside the paging time window of the first eDRX, and the second rule is used to determine a DRX cycle of a terminal device in an inactive state outside the paging time window of the first eDRX; and the first eDRX is configured by a core network device; and

paging the first terminal device outside the paging time window of the first eDRX based on the first DRX cycle.

9. The method according to claim 8, wherein the first rule is:

if a first specific DRX cycle is configured by the core network device for the first terminal device, the first DRX cycle is the minimum of the first specific DRX cycle and a default DRX cycle; or

if a first specific DRX cycle is not configured by the core network device for the first terminal device, the first DRX cycle is a default DRX cycle.

10. The method according to claim 8 or 9, wherein second eDRX is configured by the access network device for the first terminal device, and a cycle of the second eDRX is less than or equal to maximum timing duration supported by a system frame number; or

second eDRX is not configured by the access network device for the first terminal device.

11. The method according to claim 8, wherein the second rule is:

if second eDRX is configured by the access network device for the first terminal device, and a cycle of the second eDRX is less than or equal to maximum timing duration supported by a system frame number, the first DRX cycle is the cycle of the second eDRX; or

if second eDRX is not configured by the access network device for the first terminal device, the first DRX cycle is a second specific DRX cycle configured by the access network device.

12. The method according to any one of claims 8 to 11, wherein the paging the first terminal device outside the paging time window of the first eDRX based on the first DRX cycle comprises:

determining a first parameter based on the first DRX cycle, wherein the first parameter comprises at least one of the following parameters: a paging occasion index, a paging early indication sending occasion associated with a paging occasion of the first terminal device, and a group number of a terminal device group to which the first terminal device belongs; and

paging the first terminal device outside the paging time window of the first eDRX based on the first parameter.

13. The method according to any one of claims 8 to 12, wherein the method further comprises:

    determining a second DRX cycle of the first terminal device inside the paging time window of the first eDRX according to the first rule, wherein the second rule is used to determine the DRX cycle of the terminal device in the idle state inside the paging time window of the first eDRX; and
    paging the first terminal device inside the paging time window of the first eDRX based on the second DRX cycle.

14. The method according to claim 13, wherein the paging the first terminal device inside the paging time window of the first eDRX based on the second DRX cycle comprises:

    determining a second parameter based on the second DRX cycle, wherein the second parameter comprises at least one of the following parameters: a paging occasion index, a paging early indication sending occasion associated with a paging occasion of the first terminal device, and a group number of a terminal device group to which the first terminal device belongs; and
    paging the first terminal device inside the paging time window of the first eDRX based on the second parameter.

15. A communication method, wherein the method is applied to a first terminal device, the first terminal device is in an inactive state, and the method comprises:

    determining a first discontinuous reception DRX cycle inside a paging time window of first extended discontinuous reception eDRX according to a first rule, wherein the first rule is used to determine a DRX cycle of a terminal device in an idle state inside the paging time window of the first eDRX; and the first eDRX is configured by a core network device;
    determining a second DRX cycle inside a paging time window of second eDRX according to the first rule or a third rule, wherein the third rule is used to determine a DRX cycle of a terminal device in an inactive state inside the paging time window of the second eDRX; and the second eDRX is configured by an access network device;
    monitoring paging inside the paging time window of the first eDRX based on the first DRX cycle; and
    monitoring paging inside the paging time window of the second eDRX based on the second DRX cycle.

16. The method according to claim 15, wherein the determining a second DRX cycle inside a paging time window of second eDRX according to the first rule or a third rule comprises:
    determining the second DRX cycle in a first time period inside the paging time window of the second eDRX according to the first rule or the third rule, wherein the first time period does not belong to the paging time window of the first eDRX.

17. The method according to claim 15 or 16, wherein the third rule is that the second DRX cycle is a first specific DRX cycle configured by the access network device;

    the third rule is that the second DRX cycle is the minimum of a first specific DRX cycle configured by the access network device and a default DRX cycle; or
    the third rule is that the second DRX cycle is the minimum of a first specific DRX cycle configured by the access network device, a second specific DRX cycle configured by the core network device, and a default DRX cycle.

18. The method according to any one of claims 15 to 17, wherein the first rule is:

    if the second specific DRX cycle is configured by the core network device for the first terminal device, the second DRX cycle is the minimum of the second specific DRX cycle and the default DRX cycle; or
    if the second specific DRX cycle is not configured by the core network device for the first terminal device, the second DRX cycle is the default DRX cycle.

19. The method according to any one of claims 15 to 18, wherein the monitoring paging inside the paging time window of the first eDRX based on the first DRX cycle comprises:

    determining a first parameter based on the first DRX cycle, wherein the first parameter comprises at least one of the following parameters: a paging occasion index, a paging early indication sending occasion associated with a paging occasion of the first terminal device, and a group number of a terminal device group to which the first terminal device belongs; and
    monitoring the paging inside the paging time window of the first eDRX based on the first parameter.

20. The method according to any one of claims 15 to 19, wherein the monitoring paging inside the paging time window of the second eDRX based on the second DRX cycle comprises:

determining a second parameter based on the second DRX cycle, wherein the second parameter comprises at least one of the following parameters: a paging occasion index, a paging early indication sending occasion associated with a paging occasion of the first terminal device, and a group number of a terminal device group to which the first terminal device belongs; and
monitoring the paging inside the paging time window of the second eDRX based on the second parameter.

21. A communication method, wherein the method is applied to an access network device, and the method comprises:

determining a first discontinuous reception DRX cycle of a first terminal device in an inactive state inside a paging time window of a first extended discontinuous reception cycle eDRX according to a first rule, wherein the first rule is used to determine a DRX cycle of a terminal device in an idle state inside the paging time window of the first eDRX; and the first eDRX is configured by a core network device;
determining a second DRX cycle of the first terminal device inside a paging time window of second eDRX according to the first rule or a third rule, wherein the third rule is used to determine a DRX cycle of a terminal device in an inactive state inside the paging time window of the second eDRX; and the second eDRX is configured by the access network device;
paging the first terminal device inside the paging time window of the first eDRX based on the first DRX cycle; and
paging the first terminal device inside the paging time window of the second eDRX based on the second DRX cycle.

22. The method according to claim 21, wherein the determining a second DRX cycle of the first terminal device inside a paging time window of second eDRX according to the first rule or a third rule comprises:
determining the second DRX cycle of the first terminal device in a first time period inside the paging time window of the second eDRX according to the first rule or the third rule, wherein the first time period does not belong to the paging time window of the first eDRX.

23. The method according to claim 21 or 22, wherein the third rule is that the second DRX cycle is a first specific DRX cycle configured by the access network device;

the third rule is that the second DRX cycle is the minimum of a first specific DRX cycle configured by the access network device and a default DRX cycle; or
the third rule is that the second DRX cycle is the minimum of a first specific DRX cycle configured by the access network device, a second specific DRX cycle configured by the core network device, and a default DRX cycle.

24. The method according to any one of claims 21 to 23, wherein the first rule is:

if the second specific DRX cycle is configured by the core network device for the first terminal device, the second DRX cycle is the minimum of the second specific DRX cycle and the default DRX cycle; or
if the second specific DRX cycle is not configured by the core network device for the first terminal device, the second DRX cycle is the default DRX cycle.

25. The method according to any one of claims 21 to 24, wherein the paging the first terminal device inside the paging time window of the first eDRX based on the first DRX cycle comprises:

determining a first parameter based on the first DRX cycle, wherein the first parameter comprises at least one of the following parameters: a paging occasion index, a paging early indication sending occasion associated with a paging occasion of the first terminal device, and a group number of a terminal device group to which the first terminal device belongs; and
paging the first terminal device inside the paging time window of the first eDRX based on the first parameter.

26. The method according to any one of claims 21 to 25, wherein the paging the first terminal device inside the paging time window of the second eDRX based on the second DRX cycle comprises:

determining a second parameter based on the second DRX cycle, wherein the second parameter comprises at least one of the following parameters: a paging occasion index, a paging early indication sending occasion associated with a paging occasion of the first terminal device, and a group number of a terminal device group to which the first terminal device belongs; and

paging the first terminal device inside the paging time window of the second eDRX based on the second parameter.

27. A communication apparatus, configured to implement the method according to any one of claims 1 to 7, or configured to implement the method according to any one of claims 15 to 20.

28. A communication apparatus, configured to implement the method according to any one of claims 8 to 14, or configured to implement the method according to any one of claims 21 to 26.

29. A communication apparatus, wherein the apparatus comprises a processor and a storage medium, the storage medium stores instructions, and when the instructions are run by the processor, the method according to any one of claims 1 to 7 is implemented, or the method according to any one of claims 15 to 20 is implemented.

30. A communication apparatus, wherein the apparatus comprises a processor and a storage medium, the storage medium stores instructions, and when the instructions are run by the processor, the method according to any one of claims 8 to 14 is implemented, or the method according to any one of claims 21 to 26 is implemented.

31. A computer-readable storage medium, wherein the computer-readable storage medium comprises instructions, and when the instructions are run by a processor, the method according to any one of claims 1 to 7 is implemented, or the method according to any one of claims 8 to 14 is implemented, or the method according to any one of claims 15 to 20 is implemented, or the method according to any one of claims 21 to 26 is implemented.

32. A computer program product, wherein the computer program product comprises instructions, and when the instructions are run by a processor, the method according to any one of claims 1 to 7 is implemented, or the method according to any one of claims 8 to 14 is implemented, or the method according to any one of claims 15 to 20 is implemented, or the method according to any one of claims 21 to 26 is implemented.

FIG. 1

FIG. 2

S301

A terminal device determines a DRX cycle according to the foregoing solution

S302

The terminal device monitors paging based on the determined DRX cycle

FIG. 3

S401

An access network device determines a DRX cycle according to the foregoing solution

S402

The access network device pages a terminal device based on the determined DRX cycle

FIG. 4

Cycle of CN eDRX

| Paging time window | | Paging time window | ... |

First rule      Second rule      First rule      ...

FIG. 5

Paging time
window of
CN eDRX

Paging time
window of
RAN eDRX

FIG. 6

Paging time window of CN eDRX/Paging
time window of RAN eDRX

FIG. 7

Paging time window of CN eDRX

Paging time window of RAN eDRX

FIG. 8

Paging time window of RAN eDRX

Paging time window of CN eDRX

FIG. 9

Paging time window
of RAN eDRX

Paging time
window of          Overlapping
CN eDRX              part

FIG. 10

Paging time window
of RAN eDRX

Overlapping
part

Paging time window
of CN eDRX

FIG. 11

First rule

First rule/Third rule

Paging time window
of CN eDRX

Paging time window
of RAN eDRX

FIG. 12

First rule

Paging time window of CN eDRX/Paging
time window of RAN eDRX

FIG. 13

Paging time window
of CN eDRX

Paging time window
of RAN eDRX

First rule

FIG. 14

Paging time window of RAN eDRX

First rule

First rule/Third
rule

Paging time window
of CN eDRX

First rule/Third
rule

FIG. 15

First rule

Paging time window
of RAN eDRX

Paging time window
of CN eDRX

First rule/Third
rule

Overlapping part

FIG. 16

Paging time window
of RAN eDRX

First rule

First rule/Third
rule

Paging time window
of CN eDRX

Overlapping part

FIG. 17

Communication apparatus

Communication unit ——— 1801

Processing unit ——— 1802

FIG. 18

Communication apparatus

——— 1902

Communication
interface

——— 1901

Processor

——— 1904

——— 1903

Memory

FIG. 19

## INTERNATIONAL SEARCH REPORT

| International application No. |
| --- |
| **PCT/CN2023/128892** |

| A. | CLASSIFICATION OF SUBJECT MATTER |
| --- | --- |

H04W68/02(2009.01)i

According to International Patent Classification (IPC) or to both national classification and IPC

| B. | FIELDS SEARCHED |
| --- | --- |

Minimum documentation searched (classification system followed by classification symbols)

IPC:H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP: 扩展, 非连续接收, 空闲态, 非激活态, 寻呼, 时间窗, 周期, 监听, extension, discontinuous, reception, idle, state, inactive, paging, time window, period, listening, DRX, RRC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | QUALCOMM INC. "Page Monitoring in RRC_INACTIVE state with Short eDRX" *3GPP TSG-RAN WG2 Meeting #109e E-meeting, R2-2000538,* 13 February 2020 (2020-02-13), sections 2.1-2.2 | 1-32 |
| X | US 2020008042 A1 (SHARP LABORATORIES OF AMERICA, INC.) 02 January 2020 (2020-01-02) description, paragraphs [0094]-[0125], and figures 3-5 | 1-32 |
| A | CN 115134760 A (HUAWEI TECHNOLOGIES CO., LTD.) 30 September 2022 (2022-09-30) entire document | 1-32 |
| A | WO 2022193134 A1 (GUANGDONG OPPO MOBILE TELECOMMUNICATIONS CORP., LTD.) 22 September 2022 (2022-09-22) entire document | 1-32 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **09 January 2024** | **24 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/128892**

| Patent document cited in search report | | | Publication date (day/month/year) | Patent family member(s) | | | Publication date (day/month/year) |
|---|---|---|---|---|---|---|---|
| US | 2020008042 | A1 | 02 January 2020 | WO | 2020005958 | A1 | 02 January 2020 |
| CN | 115134760 | A | 30 September 2022 | WO | 2022206721 | A1 | 06 October 2022 |
| | | | | CN | 116438889 | A | 14 July 2023 |
| WO | 2022193134 | A1 | 22 September 2022 | EP | 4294088 | A1 | 20 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211375214